# EUROPÄISCHE PATENTSCHRIFT

(11) **EP 3 058 009 B1**
(45) Veröffentlichungstag und Bekanntmachung des Hinweises auf die Patenterteilung: **31.10.2018**
(21) Anmeldenummer: 14783876.7
(22) Anmeldetag: 14.10.2014
(51) Int. Cl.: C08G 18/48, C08G 18/66, C08G 18/73, C08G 18/76, C08K 5/00, C08G 18/32, C08K 5/3445, C08L 75/08

(54) **LEITFÄHIGES THERMOPLASTISCHES POLYURETHAN**
CONDUCTIVE THERMOPLASTIC POLYURETHANE
POLYURÉTHANE THERMOPLASTIQUE CONDUCTEUR D'ÉLECTRICITÉ

(30) Priorität: 15.10.2013 EP 13188767
(43) Veröffentlichungstag der Anmeldung: 24.08.2016
(73) Patentinhaber: BASF SE, 67056 Ludwigshafen am Rhein (DE)
(72) Erfinder: SCHÄFER, Frank, 32351 Stemwede (DE); MINDER, Ernst, CH-4450 Sissach (CH); KEMPFERT, Dirk, 32351 Stemwede-Dielingen (DE); BAHR, Christoph, 49459 Lembruch (DE); HINRICHS, Cornelia, 49356 Diepholz (DE); OLTMANNS, Anja, 49324 Melle (DE)
(74) Vertreter: BASF IP Association
(86) Internationale Anmeldenummer: PCT/EP2014/071985
(87) Internationale Veröffentlichungsnummer: WO 2015/055631

(56) Entgegenhaltungen:
- EP-A1- 0 964 013
- EP-A1- 2 500 376
- US-A1- 2010 056 646

## Beschreibung

Die vorliegende Erfindung bezieht sich auf eine Zusammensetzung enthaltend thermoplastisches Polyurethan und ein Salz und/oder eine ionische Flüssigkeit die zur Erhöhung der Leitfähigkeit in Polymeren eingesetzt werden kann.

### Stand der Technik

Es ist bekannt, dass Polymere einer starken elektrostatischen Aufladung unterliegen und einmal aufgebrachte Ladungen wegen der geringen elektrischen Leitfähigkeit von Polymeren nur langsam abgeführt werden können.

Durch die elektrostatische Aufladung werden Partikel aus der Umgebung angezogen, wodurch es zur beschleunigten Verunreinigung solcher Oberflächen kommen kann. Neben der rein ästeteischen Beieinträchtigung dieser Materialien kann es durch die elektrostatische Aufladung von Polymeren auch zur Adhäsion von Polymermaterialien untereinander kommen. Hier sei beispielhaft die Klumpenbildung von Polymerpulvern oder die Adhäsion von Folien genannte, die häufig zu Schwierigkeiten in der Produktion führen. Ebenso problematisch sind die Folgen elektrostaisch aufgeladener Polymere in der Herstellung elektronischer Bauteile, da diese bei zu hohen Stromflüssen zerstört werden können.
Schließlich kann sich die elektrostatische Aufladung der Polymere auf Personen oder in die Umgebung entladen, wodurch es zur Funkenbildung kommt. Insbesondere dort, wo gleichzeitg explosive Gemische gelagert sind hat dies häufig schon zu folgenschweren Explosionen geführt.

Aus diesem Grund werden schon immer Lösungen gesucht, die die elektrostatische Aufladung von Polimeren verringern.

Es ist bekannt, dass statische Aufladung durch den Zusatz von Additiven, welche die Oberflächenleitfähigkeit verbessern, begrenzt werden können. Diese Addititve haben jedoch den Nachteil, dass sie bei geringer Luftfeuchtigkeit praktisch unwirksam sind. Zudem handelt es sich oft um niedermolekure Antistatika, die, aufgrund ihrer hohen Polarität, oft eine schlechte Verträglichkeit zum Substrat aufweisen. In Verbindung mit der für die Leitfähigkeit vorteilhaften Mobilität führt dies dies zu einem Auswaschen des Additives. Dadurch nimmt die antistatische Eigenschaft des Polymers ab.

Daher werden schon lange auch Additive verwendet, die auch bei geringer Luftfeuchtigkeit wirksam sind. Dies wird üblicherweise durch eine Erhöhung der Volumenleitfähigkeit erreicht, d.h. die verbesserte Leitfähigkeit ist nicht nur auf der Oberfläche sondern im gesamten Polymer gegeben. Verbreitete Additive zur Erhöhung der Volumenleitfähigkeit sind beispielsweise Russ oder Metallpulver. Diese Additive ändern jedoch die mechanischen Eigenschaften der Polymeren nicht unerheblich. Häufig kommt es zum Anstieg der Steifigkeit des antistatisch ausgestatteten Polymers oder der Abrieb erhöht sich. Insbesondere für transparente Polymere sind Additive wie Russ oder Metallpulver nicht anwendbar.

Um eine permanente antistatische Ausrüstung zu erreichen, wird in der EP 0 613 919 A1 vorgeschlagen, bestimmte Polyetheresteramide als antistatische Zusätze für thermoplastische Polymere zu nutzen. In spezifischen Ausführungsformen werden zusätzlich Alkali- oder Erdalkalihalogenide zugesetzt.

Die EP0829520B1 beschreibt ein faserbildendes oder faserförmiges organisches nicht leitfähiges polymeres Material zusammen mit einem weiteren zur lonenleitung befähigten Polymeren oder Copolymeren so in ein thermoplastisches oder elastomeres Substrat eingearbeitet, dass das leitfähige Polymer oder Copolymer im wesentlichen an der Faser adsorptiv gebunden oder in ihr gelöst ist und mit ihr zusammen ein leitfähiges Netzwerk im thermoplastischen oder elastomeren Substrat, in dem die Faser nicht löslich ist, ausbildet.

Ein Teilbereich des zur lonenleitung befähigten Polymeren oder Copolymeren besitzt dabei polare Gruppen, die ein Salz einer anorganischen oder organischen Protonensäure komplexieren oder solvatisieren können. Das faserförmige oder faserbildende organische polymere Material muss dabei so ausgewählt werden, dass es sich im thermoplastischen oder elastomeren Substrat nicht löst sondern eine netzartige Struktur sich berührender Fasern ausbilden kann. Bei Unverträglichkeit kommt es zu Entmischung, Delaminierung des nicht leitfähigen polymeren Matrials und des zur lonenleitung befähigten Polymeren (Compound) und in der Folge zu optischen und mechanischen Einbußen dieses Compunds.

In der EP2227391 wir ein leitfähiger Mehrschichtaufbau beschrieben. Hierbei basiert die leitfähige Schicht auf einem Polyethylenglykol(PEG)-basiertem thermoplastischem Polyurethan. Zum einen ist die Beschichtung eines Polymers durch ein zweites Polymer verfahrenstechnisch deutlich aufwändiger als die Compoundierung. Gleichzeitig hat ein PEG-basiertes thermoplastisches Polyurethan eine schlechte Anhaftung zu anderen, insbesondere unpolaren, Schichten. Dieses kann zu einem partiellen Ladungsaufbau innerhalb der unpolaren Schicht führen, was wiederum zu einer spontanen Entladung und somit in der Folge zu einem Funktionsausfall führen kann.

In EP1984438 oder EP2170972 wird die Wirksamkeit von ionischen Flüssigkeiten in TPU beschrieben. Nachteile der hier beschriebenen Zubereitungen sind zum einen, dass aufgrund der hohen Polarität der ionischen Flüssigkeiten der Einsatz auf polare Polymere beschränkt ist. In unpolaren Polymeren läßt sich ein nur sehr geringer Anteil ionische Flüssigkeit einarbeiten, wodurch die Leitfähigkeit des Polymers praktisch unzureichend ist.

Aufgrund der vorstehend erwähnten Beschränkungen der beschriebener Leitfähigkeitsvermittler, besteht ein dringendes Interesse an einem antistatisch wirkenden, ökologisch unbedenklichen und bei geringer Luftfeuchtigkeit wirksamen Additiv für die Erhöhung der Volumenleitfähigkeit von Polymeren, insbesondere von apolaren Polymeren. Dieses Additiv soll einfach herstellbar sein, einfach in das Polymer einarbeitbar bzw. mit ihm mischbar sein. Dabei solldie erzielte Volumenleitfähigkeit des Polymers über einen langen Zeitraum erhalten bleiben und das Additiv soll ohne nennenswerte Einschränkung in niedrigen Mengen in allen handelsüblichen Polymeren eingesetzt werden können und dabei deren Optik und Mechanik nur unwesentlich beeinträchtigen.

Überraschenderweise konnte diese Aufgabe gelöst werden durch eine Zusammensetzung enthaltend ein thermoplastisches Polyurethan, wobei das thermoplastische Polyurethan hergestellt ist aus a) einem Diisocyanat b) einem Polyol, das ein Polyol A und ein Polyol B enthält und c) einem Kettenverlängerer gegebenenfalls mit Hilfe von Katalysatoren und gegebenenfalls weiterhin enthalten Zusatzstoffe und/oder Hilfsstoffe wobei in der Zusammensetzung ein Salz und/oder eine ionische Flüssigkeit, bevorzugt eine ionische Flüssigkeit, enthalten ist und das Polyol A Ethoxy- und Propoxy- Gruppen enthält und das Polyol B Butoxy-Gruppen enthält.
Erfindungsgegenstand ist weiterhin ein Verfahren zur Herstellung der Erfindungsgemäßen Zusammensetzung, die Verwendung der erfindungsgemäßen Zusammensetzung als Leitfähigkeitsverbesserer und das speziell für den Einsatz als Leitfähigkeitsverbesserer entwickelte thermoplastische Polyurethan.

Ist in der Zusammensetzung ein weiteres Polymer enthalten so bildet das thermoplastische Polyurethan ein Netzwerk aus, das in Verbindung mit dem Salz und/oder der ionischen Flüssigkeit elektrisch leitende Bahnen ergibt, über die Ladung aus dem Polymer abfließen kann. Dabei eignet sich das erfindungsgemäße thermoplastische Polyurethan gleichermaßen gut für unpolare und polare Polymere. Der besondere Vorteil liegt darin, dass es sich bevorzugt auch in unpolare Polymere, für die es nur wenige Leitfähigkeitsverbesserer gibt, sehr gut einarbeiten lässt. Gleichzeitig besitzt das erfindungsgemäße thermoplastische Polyurethan ausreichend Polarität um lonenquellen wie z.B. Salze oder ionische Flüssigkeiten aufzunehmen ein leitfähiges Netzwerk im Polymer auszubilden.

Es wird erstmalig möglich antistatisches thermoplastisches Polyurethan in Polymeren wie Polypropylen (PP), Polyethylen (PE), Polystyrol (PS) und Acrlynitril-Butadien-Styrol (ABS) einzusetzen, in denen TPU bisher als unverträglich gegolten hat.

Die hervorragend gute Kompatibilität in praktisch allen Polymeren konnte insbesonder durch die spezielle Gestaltung des Polyol im thermoplastischen Polyurethan erreicht werden. Das Polyol ist zusammengesetzt aus Polyol A und Polyol B wobei das Polyol A Ethoxy- und Propoxy- Gruppen enthält und das Polyol B Butoxy-Gruppen.

Da es sich bei dem Leitfähigkeitserhöhung verwendeten thermoplastischen Polyurethan um eine hochmolekulare Verbindungen handelt ermöglicht wird somit eine besonders dauerhafte antistatische Ausrüstungen von Polymeren ermöglicht.

Die Eigenschaften der Zusammensetzung wie Thermostabilität, Licht- und Hydrolysebeständigkeit, die neben dem thermoplastischen Polyurethan, einem Salz und/oder einer ionischer Flüssigkeit zusätzlich ein Polymers sind vergleichbar. Die Eigenschaften des Polymers bleiben in den meisten Fällen nahezu unbeeinflusst.

Im Bereich niedriger Zusatzmengen des thermoplastischen Polyurethans und des Salz und/oder ionischen Flüssigkeit werden auch die optischen Eigenschaften nur wenig verändert und transparente, naturfarbene Materialien bleiben im wesentlichen transparent, bzw. naturfarben, was für viele Einsatzgebiete von grosser Bedeutung ist.

TPU basierte Antistatik Masterbatches, die auf Basis der für thermoplastisches Polyurethan typischen Herstellungs- und Verarbeitungsprozesse hergestellt werden, können deutlich wirtschaftlicher hergestellt werden als vergleichbare Systeme, die auf anderen Polymeren basieren.

Bei den im Folgenden geschilderten bevorzugten Ausführungsformen sind die oben beschriebenen vorteilhaften Effekte weiter ausgeprägt.

### Detaillierte Beschreibung

Ein Gegenstand der Erfindung ist Zusammensetzung enthaltend ein thermoplastisches Polyurethan, wobei das thermoplastische Polyurethan hergestellt ist aus
a) einem Diisocyanat
b) einem Polyol, das ein Polyol A und ein Polyol B enthält und
c) einem Kettenverlängerer
gegebenenfalls mit Hilfe von Katalysatoren und gegebenenfalls weiterhin enthalten Zusatzstoffe und/oder Hilfsstoffe
dadurch gekennzeichnet, dass
in der Zusammensetzung ein Salz und/oder eine ionische Flüssigkeit, bevorzugt eine ionische Flüssigkeit, enthalten ist
und das Polyol A Ethoxy-Gruppen und Propoxy- Gruppen enthält und das Polyol B Butoxy-Gruppen enthält.

Ein weiterer Erfindungsgegenstand ist das thermoplastische Polyurethan Thermoplastisches Polyurethan hergestellt aus a) einem Diisocyanat, b) einem Polyol, das ein Polyol A und ein Polyol B enthält und c) einem Kettenverlängerer gegebenenfalls mit Hilfe von Katalysatoren und gegebenenfalls weiterhin enthalten Zusatzstoffe und/oder Hilfsstoffe, wobei das Polyol A Ethoxy- und Propoxy-Gruppen enthält und das Polyol B Butoxy-Gruppen enthält.

Thermoplastische Polyurethane selbst sind hinlänglich bekannt. Die Herstellung erfolgt durch Umsetzung von (a) Isocyanaten mit (b) gegenüber Isocyanaten reaktiven Verbindungen, auch als Polyole bezeichnet, die ein zahlenmittleres Molekulargewicht von 0,5 x 10³ g /mol bis 300 x 10³ g /mol haben, und gegebenenfalls Kettenverlängerungsmittel mit einem Molekulargewicht von 0,05 x 10³ g/mol bis 0,499 x 10³ g/mol gegebenenfalls mit Hilfe von Katalysatoren und/oder Zusatzstoffen und/oder Hilfsstoffen.

Die Komponenten (a) Isocyanat, (b) gegenüber Isocyanaten reaktive Verbindungen, auch als Polyol angesprochen und (c) Kettenverlängerer werden einzeln oder zusammen auch als Aufbaukomponenten angesprochen.

Als organische Isocyanate (a) werden bevorzugt aliphatische, cycloaliphatische, araliphatische und/oder aromatische Isocyanate eingesetzt, bevorzugt Diisocyante, weiter bevorzugt aliphatische Diisocyanate, weiter bevorzugt Tri-, Tetra-, Penta-, Hexa-, Hepta- und/oder Oktamethylendiisocya-nat, 1,6-Hexamethylendiisocyanat (HDI), 2-Methyl-pentamethylen-diisocyanat-1,5,2-Ethyl-butylen-diisocyanat-1,4, Pentamethylen-diisocyanat-1,5, Butylen-diisocyanat-1,4, 1-Isocyanato-3,3,5-trimethyl-5-isocyanatomethyl-cyclohexan (Isophoron-diisocyanat, IPDI), 1,4- und/oder 1,3-Bis(isocyanatomethyl)cyclohexan (HXDI), 1,4-Cyclohexan-diisocyanat, 1-Methyl-2,4-und/oder-2,6-cyclohexan-diisocyanat und/oder 4,4'-, 2,4'-und 2,2'-Dicyclohexylmethan-diisocyanat (H12MDI), und/oder 2,4-Tetramethylenxylendiisocyant (TMXDI). Weiter bevorzugt ist das Diisocyanat ausgewählt aus der Gruppe: 1,5-Pentamethylendiisocyanat, 1,6-Hexamethylendiisocyanat (HDI), 1-Isocyanato-3,3,5-trimethyl-5-isocyanatomethyl-cyclohexan (Isophoron-diisocyanat, IPDI), 1,4-Cyclohexan-diisocyanat, 1-Methyl-2,4- und/oder -2,6-cyclohexan-diisocyanat und/oder 4,4'-, 2,4'- und 2,2'-Dicyclohexylmethan-diisocyanat (H12MDI). Besonders bevorzugt wird Hexamethylendiisocyanat, insbesondere 1,6-Hexamethylendiisocyanat (HDI).

Als gegenüber Isocyanaten reaktive Verbindungen (b) werden bevorzugt Polyesterole oder Polyetherole verwendet, die auch unter dem Begriff "Polyole" zusammengefasst werden. Bevorzugt sind Polyetherole. Die zahlenmittleren Molekulargewichte dieser Polyole liegen zwischen 0,5 x 10³ kg/mol und 8 x 10³ kg/mol, bevorzugt zwischen 0,6 x 10³ g/mol und 5 x 10³ g/mol, insbesondere zwischen 0,8 x 10³g/mol und 3 x 10³ kg/mol. Bevorzugt haben die Polyole eine mittlerer Funktionalität zwischen 1,8 und 2, 4, bevorzugt zwischen 1,9 und 2,2, insbesondere 1,95-2,05. Bevorzugt weisen die Polyole (b) nur primäre Hydroxylgruppen auf.

Erfindungsgemäß umfasst das Polyol zumindest zwei Polyole, das Polyol A und das Polyol B, wobei das Polyol A Ethoxy-Gruppen und Propoxy- Gruppen enthält und das Polyol B Butoxy-Gruppen enthält.

In einer bevorzugten Ausführungsform ist der Mol-% Anteil der Ethoxy- und Propoxy-Gruppen und Butoxy-Gruppen in der Zusammensetzung 1 jeweils mindestens 5 Mol-%, bevorzugt mindestens 10 Mol-% bezogen auf das Mol Gewicht des gesamten Polyols. Weiterhin bevorzugt ist in der Zusammensetzung 1 gleichzeitig der Anteil der Ethoxy-Gruppen in dem Polyol mindestens 25 Mol-%, weiter bevorzugt mindestens 40 Mol-%, weiter bevorzugt mindestens 60 Mol-% und besonder bevorzugt mindesten 65 Mol-% bezogen auf das gesamte Polyol.

Ganz besonders bevorzugt beträgt der Mol-% Anteil der Ethoxy-Gruppe zwischen 70 Mol-% und 75 Mol-%, der Anteil der Propoxy-Gruppe zwischen 12 Mol-% und 18 Mol-% und der Anteil der Butoxy-Gruppen zwischen 12 Mol-% und 18 Mol-% bezogen auf das gesamte Polyol.

Die Bestimmung des prozentualen Molanteils erfolgt über 1H NMR, gemäß ASTM D4875 - 11 (2011) Standard Test Methods of Polyurethane Raw Materials: Determination of the Polymerized Ethylene Oxide Content of Polyether Polyols"

Weiter bevorzugt ist das Polyol B in der Zusammensetzung 1 ein Homopolymer. Ein Homopolymer ist ein Polymer das praktisch aus nur einer Monomer-Gruppe aufgebaut ist, d.h. im Wesentlichen keine anderen Monomer enthält. Im Wesentlichen heißt, dass zumindest 95 Mol-% des Hompolymers aus nur einem Monomer bestehen, weiter bevorzugt mindestens 97,5 Mol-%, und besonders bevorzugt mindestens 99 Mol-%.

Weiterhin bevorzugt ist in der Zusammensetzung 1 das Polyol A ein Blockcopolymer mit einem Block und zwei Enden, wobei der Block Ethoxy- und Propoxy-Gruppen enthält und die beiden Enden des Blockcopolymers ausschließlich Ethoxy-Gruppen enthalten. Bevorzugt ist in diesem Blockpolymer der Anteil der Ethoxy-Gruppen in den beiden Enden des Blockcopolymers mehr als 5 Mol-%, bevorzugt mindestens 10 Mol-% und besonders bevorzugt mindestens 15 Mol-% bezogen auf das zahlenmittlere Molekulargewicht des gesamten Blockcopolymers. Ganz besonders bevorzugt enthalten die Endens des Blockcopolymers 10 Mol-% bis 20 Mol-% des Ethoxy-Gruppen bezogen auf das gesamte Blockcopolymer, weiterhin enthält der Block des Blockcopolymers zwischen 60 Mol-% und 70 Mol-% Ethoxy-Gruppen und zudem 15 Mol-% bis 20 Mol-% Propoxy-Gruppen bezogen auf das gesamte Blockcopolymer.

Das Polyol A wird hergestellt indem in einem 1. Schritt in einem Reaktor zu einem di-funktionellen Starter-Molekül die gewünschten ringförmigen Alkylenoxide, im vorliegenden Fall Ethylenoxid und Propylenoxid gegeben werden, die unter Ringöffnung zu einem Vorpolymer polymerisieren. Bevorzugt werden Startermoleküle mit zwei OH-Gruppen verwendet, die bevorzugt primäre OH-Gruppen sind. Ganz besonders bevorzugte Beispiel sind 1,2 Ethanglycol, auch Monoethylglycol (MEG) genannt, Diethylenglycol (DEG), Monopropandiol (MPG), bevorzugt 1,3-Propylenglycol, sowie Dipropandiol (DPG), bevorzugt das 4-Oxa-1,7-heptandiol. Über die Zugabe der Alkylenoxide kann die Struktur des Vorpolymers bestimmt werden. Wird wechselnd einmal Ethylenoxid zugegeben, anschließend wieder Propylenoxid, so entstehen in Abhängigkeit der zugegebenen Menge Blöcke dieser Monomere in dem Vorpolymer, dies wird auch als Blockfahrweise bezeichnet. Werden beide Alkylenoxide gleichzeitig zugegeben, so reagieren die Alkylenoxide willkürlich, was auch als Mischfahrweise bezeichnet wird. Die Mischfahrweise ist bevorzugt. Der Fachmann kann auf Grund der Molekulargewichte der Alkylenoxide und Steuerung der Zugabemenge die Struktur des Polyols und die molare Verteilung der Monomere in engen Bereichen steuern. In einer bevorzugten Ausführungsform wird zu dem Vorpolymerisat aus Schritt 1 in einem Schritt 2 ausschließlich Ethylenoxid gegeben, so dass das Polyol A an den Enden Ethyoxy-Gruppen aufweist.

Die Ringöffnungspolymerisation erfolgt mit Hilfe von Katalysatoren. Dabei handelt es sich bevorzugt um basische Katalysatoren wie Alkali- oder Erdalkalimetallhydroxide bzw. Alkali- oder Erdalkalime tallalkoholate, bevorzugt sind dies NaOH, KOH, CsOH oder Natriummethylat und Kaliummethylat. Andere bevorzugte Katalysatoren sind solche, die funktionelle Amino-Gruppen enthalten, bevorzugte Beispiel sind N,N- Dimethylethanolamin (DMEOA) oder Imidazol. Eine dritte Gruppe bevorzugter Katalysatoren sind Carbenen, bevorzugt N-heterocyclische Carbene.
Das im Schritt 2 erhaltene Produkt wird in Schritt 3 mit einem Fällungsmittel ausgefällt. Fällungsmit tel sind üblicherweise Protonendonatoren, Beispiel bevorzugter Fällungsmittel sind Kohlensäure (H₂CO₃), Phosphorsäure (H₃PO₄,). Das in Schritt 3 aufbereitete Polymerisat wird in einem 4. Schritt gefiltert, um den Katalysator zu entfernen. Als Filtrationsmittel werden Bindemittel verwendet, bevorzugte Beispiel für Bindemittel sind Cellulose oder Kieselgel. Polyol B wird analog hergestellt, wobei in Schritt 1 ausschließlich Butylenoxid eingesetzt wird und der Schritt 2 wegfällt.

Ein bevorzugtes Polyol A ist das von der BASF Polyurethanes GmbH im Oktober des Jahres 2013 unter der Bezeichnung Lupranol VP9243 beziehbare Polyol.

### Kettenverlängerer

In bevorzugten Ausführungsformen sind in dem thermoplastischen Polyurethan der Zusammensetzung 1 Kettenverlängerungsmittel enthalten. Dies sind bevorzugt aliphatische, araliphatische, aromatische und/oder cycloaliphatische Verbindungen mit einem Molekulargewicht von 0,05 x 10³ kg/mol bis 0,499 x 10³ g/mol. Bevorzugt sind die Kettenverlängerer 2-funktionelle Verbindungen, d.h. sie haben zwei mit Isocynaten reaktive Gruppen. Bevorzugte Kettenverlängerer sind Diamine und/oder Alkandiole mit 2 bis 10 C-Atomen im Alkylenrest, insbesondere Butandiol-1,4, Hexandiol-1,6 und/oder Di-, Tri-, Tetra-, Penta-, Hexa-, Hepta-, Okta-, Nona- und/oder Dekaalkylenglykole mit 3 bis 8 Kohlenstoffatomen, bevorzugt entsprechende Oligo- und/oder Polypropylenglykole, wobei bevorzugt auch Mischungen der Kettenverlängerer eingesetzt werden können. Bevorzugt haben die Verbindungen (c) nur primäre Hydroxylgruppen. Ganz besonders bevorzugt wir zur Herstellung des thermoplastischen Polyurethans in der Zusammensetzung 1das 1,3-Propandiol, 1,4-Butandiol oder 1,6-Hexandiol oder jegliche Kombination, d.h. 1,3-Propandiol und 1,4-Butandiol, oder 1,3-Propandiol und 1,6 Hexandiol, oder 1,4-Butandiol und 1,6-Hexandiol, oder 1,6-Hexandiol verwendet. Ganz besonders bevorzugtwird das 1,6-Hexandiol verwendet.

### Ionische Flüssigkeit

In einer bevorzugten Ausführungsform ist in dem thermoplastischen Polyurethan der Zusammensetzung 1 das Salz und/oder die ionische Flüssigkeit in einer Menge von 0,1 Gew.-% bis 25 Gew.-%, bevorzugt zwischen 1Gew.-% und 10 Gew.-%, weiter bevorzugt zwischen 1,5 Gew.-% und 7,5 Gew.-% und besonders bevorzugt zwischen 2 Gew.-% und 5 Gew.-% enthalten ist. Der Gew.-% Anteil bezieht sich auf die Gesamtmenge des thermoplstischen Polyurethans in das das Salz und/oder die ionische Flüssigkeit eingearbeitet worden ist.

Grundsätzlich ist jedes Salz oder jede ionische Flüssigkeit geeignet in das erfindungsgemäße thermoplastische Polyurethan eingearbeitet zu werden, um so in der Zusammensetzung als Löslichkeitsverbesserer zu fungieren und gemischt mit einem Polymer dessen Leitfähigkeit zu erhöhen.

Geeignete ionische Flüssigkeiten sind der WO 2011/069960 zu entnehmen. Diese Schrift ist durch Referenz in dieser Patentanmeldung enthalten.
Die ionische Flüssigkeit ist entweder eine einzelne Substanz oder eine Mischung verschiedener Substanzen.

Vorzugsweise sind die ionischen Flüssigkeiten flüssig bei einer Temperatur von über 210 °C flüssig, bevorzugt über 200 °C und besonders bevorzugt über 190 °C.

Eine bevorzugte Gruppe an ionischen Flüssigkeiten sind solche die einen Imidazolring enthalten. Besonders bevorzugt ist 1-Butyl-3-Methyl-Imidazoliumion (BMIM) oder das 1-Ethyl-3-Methylimidazoliumion (EMIM), die weiter bevorzugt als Sulfat verwendet werden.

Eine andere Gruppe bevorzugter ionischer Flüssigkeiten enthalten ein Diazabicyclo-Struktur, besonders bevorzugt handelt es sich um die einfach protonierte Form von 1,8-Diazabicyclo[5.4.0]undec-7-en (DBU) oder von 1,5-Diazabicyclo[4.3.0]non-5-en.

In einer bevorzugten Ausführungsform wird nur eine ionische Flüssigkeit in das thermoplastische Polyurethan eingearbeitet, in einer anderen bevorzugten Ausführungsform enthält das thermoplastische Polyurethan mindestens zwei ionische Flüssigkeiten.

### Salz

Bevorzugte Salze, die zur Erhöhung der Leitfähigkeit in dem thermoplastischem Polyurethan eingesetzt werden, sind Salze einer anorganischen oder niedermolekularen organischen Protonensäure. Niedermolekular heißt, dass das Molekulargewicht der Protonensäure kleiner als 500 g/mol, bevorzugt weniger als 400 g/mol und besonders bevorzugt weniger als 300 g/mol ist.

Das Salz ist bevorzugt genannten Erdalkali-Salze, Perchlorate und die quarternären Ammoniumslaz ist besonders bevorzugt ausgewählt aus der Gruppe, bestehend aus LiCl0₄ , LiCF₃S0₃, NaCl0₄, LiBF₄, NaBF₄, KBF₄, NaCF3S03, KCl0₄, KPF₆, KCF₃S0₃, KC4 F₉S0₃, Ca(Cl0₄), Ca (PF₆), Mg(Cl0₄), Mg(CF₃S0₃), Zn(Cl0₄), Zn(PF6), Ca(CF₃S0₃), quarternäres Ammoniumethosulfat, Mischungen aus Fettsäurepolyolester und Natriumperchlorat, partielle Fettsäureester, Alkalisalze quaternärer Ammoniumverbindungen in Verbindung mit Natriumdicyanamid, das Na-Salz der Dodecylbenzolsulfonsäure und 1-Hydroxy-tallow-1-trimethylammoniumchlorid [Plastat C 100, Fa.New Japan chemical Co.Ltd.. Bevorzugt sind die Li-Salze LiCl0₄ , LiCF₃S0₃, NaCl0₄, LiBF₄, ganz besonders bevorzugt ist LiCF₃S0₃.Ein Salz wird in einer bevorzugten Ausführungsform alleine in dem thermoplastischen Polyurethan verwendet. In einer anderen bevorzugten Ausführungsform werden mindestens zwei Salze verwendet. In weiteren bevorzugten Ausführungsformen wird mindestens ein Salz und eine ionische Flüssigkeit zu dem thermoplastischen Polyurethan gegeben.

Ein weiterer Erfindungsgenstand ist eine Mischung, enthaltend eine Zusammensetzung wie oben beschrieben und zumindest ein Polymer. Wie oben ausgeführt wurde, kann die Zusammensetzung durch das erfindungsgemäße thermoplastische Polyurethan in praktisch alle gängigen Polymere oder deren Mischungen gut eingearbeitet werden, d.h. sowohl in unpolare als auch in polare Polymere. Bevorzugt ist die Gruppe der unpolaren Polymere, da für diese Gruppe weniger Leitfähigkeitsverbesserer zur Verfügung stehen. Weiter bevorzugt ist das Polymer ausgewählt aus der Gruppe Polyethylen, Polypropylen, Polystyrol, Polyoxymethylen, Ethylenvinylacetat, Acrylnitril-Butadien-Styrol, Polyvinylchlorid, thermoplastisches Polyurethan, dessen Zusammensetzung sich in eine bevorzugten Ausführungsform von der Zusammensetzung des thermoplastischen Polyurethans in das das Salz und/oder die ionische Flüssigkeit eingearbeitet ist, unterscheidet. Besonders bevorzugt ist das Polymer ausgewählt aus der Gruppe Polyethylen, Polypropylen und Polystyrol.

Weiter bevorzugt ist in der Zusammensetzung das thermoplastische Polyurethan in der Zusammensetzung mit einem Gewichtsanteil von mehr als 1 Gew.-% und weniger als 50 Gew.-% enthalten, bevorzugt mit mehr als 5 Gew.-% und weniger als 35 Gew.-%, besonders bevorzugt mehr als 15 Gew.-% und weniger als 30 Gew.-%.

### Katalysatoren

Katalysatoren (d), welche insbesondere die Reaktion zwischen den NCO-Gruppen der Diisocyanate (a) und den Hydroxylgruppen der gegenüber Isocyanaten reaktiven Verbindung (b), auch als Polyol angesprochen, und dem Kettenverlängerungsmittel (c) beschleunigen, sind in einer bevorzugten Ausführungsform tertiären Amine, insbesondere Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan, in einer anderen bevorzugten Ausführungsform sind dies organische Metallverbindungen wie Titansäureester, Eisenverbindungen, bevorzugt Eisen-(III)-acetylacetonat, Zinnverbindungen, bevorzugt Zinndiacetat, Zinndioctoat, Zinndilaurat oder die Zinndialkylsalze aliphatischer Carbonsäuren, bevorzugt Zinndioctoat, Tetrabutylorthotitanat oder Wismutsalzen in denen Wismut bevorzugt in den Oxidationsstufen 2 oder 3 vorliegt, insbesondere 3, bevorzugt sind Salze von Carbonsäuren, bevorzugt Carbonsäuren mit 6 bis 14 Kohlenstoffatomen, besonders bevorzugt mit 8 bis 12 Kohlenstoffatomen. Bevorzugte Wismutsalze sind Wismut(III)-neodecanoat, Wismut-2-etyhlhexanoat und Wismut-octanoat.

Die Katalysatoren (d) werden bevorzugt in Mengen von 0,0001 bis 0,1 Gew.-Teilen pro 100 Gew.-Teile der mit Isocyanten reakiven Verbindung (b), auch als Polyol bezeichnet, eingesetzt. Bevorzugt werden Zinnkataylsatoren eingesetzt, insbesondere Zinndioktoat.

### Hilfsstoffe/Zusatzstoffe

Neben Katalysatoren können den Aufbaukomponenten (a) bis (c) auch Hilfsstoffe und/oder Zusatzstoffe hinzugefügt werden. Genannt seien beispielsweise oberflächenaktive Substanzen, Füllstoffe, Flammschutzmittel, Keimbildungsmittel, Oxidationsstabilisatoren, Gleit- und Entformungshilfen, Farbstoffe und Pigmente, gegebenenfalls Stabilisatoren, z.B. gegen Hydrolyse, Licht, Hitze oder Verfärbung, anorganische und/oder organische Füllstoffe, Verstärkungsmittel und Weichmacher. Als Hydrolyseschutzmittel werden bevorzugt Oligomere und/oder polymere aliphatische oder aromatische Carbodiimide verwendet. Um die erfindungsgemäßen TPU gegen Alterung zu stabilisieren, können dem TPU bevorzugt Stabilisatoren zugegeben. Stabilisatoren im Sinne der vorliegenden Erfindung sind Additive, die einen Kunststoff oder eine Kunststoffmischung gegen schädliche Umwelteinflüsse schützen. Beispiele sind primäre und sekundäre Antioxidantien, Hindered Amine Light Stabilizer, UV-Absorber, Hydrolyseschutzmittel, Quencher und Flammschutzmittel. Beispiele für kommerzielle Stabilisatoren sind gegeben in Plastics Additive Handbook, 5th Edition, H. Zweifel, ed., Hanser Publishers, München, 2001 ([1]), S.98-S136.

In einer bevorzugten Ausführungsform weisen die UV-Absorber ein zahlenmittleres Molekulargewicht von größer als 0,3 x 10³ g/mol, insbesondere größer als 0,39 x10³ g/mol, auf. Ferner sollten die bevorzugt verwendeten UV-Absorber eine Molekulargewicht von nicht größer als 5 x10³ g/mol, besonders bevorzugt von nicht größer als 2 x10³ g/mol aufweisen.

Besonders geeignet als UV-Absorber ist die Gruppe der Benzotriazole. Beispiele für besonders geeignete Benzotriazole sind Tinuvin® 213, Tinuvin® 234, Tinuvin® 571, sowie Tinuvin® 384 und das Eversorb®82 . Üblicherweise werden die UV-Absorber in Mengen von 0.01 bis 5 Gew.-% bezogen auf die Gesamtmasse TPU zudosiert, bevorzugt 0,1 - 2,0 Gew.-%, insbesondere 0,2 - 0,5 Gew.-%.

Oft ist eine oben beschriebene UV-Stabilisierung basierend auf einem Antioxidant und einem UV-Absorber noch nicht ausreichend, um eine gute Stabilität des erfindungsgemäßen TPU gegen den schädlichen Einfluss von UV-Strahlen zu gewährleisten. In diesem Falle kann zusätzlich zu dem Antioxidans und dem UV-Absorber noch ein Hindered-Amine Light Stabiizer (HALS) zu dem erfindungsgemäßen TPU zugegeben werden. Die Aktivität der HALS-Verbindungen beruht auf ihrer Fähigkeit, Nitroxylradikale zu bilden, die in den Mechanismus der Oxidation von Polymeren eingreift. HALS gelten als hocheffiziente UV-Stabilisatoren für die meisten Polymere.

HALS-Verbindungen sind allgemein bekannt und kommerziell erhältlich. Beispiele für kommerziell erhältliche HALS-Stabilisatoren finden sich in Plastics Additive Handbook, 5th edition, H. Zweifel, Hanser Publishers, München, 2001, S. 123-136.

Als Hindered Amine Light Stabilizer werden bevorzugt Hindered Amine Light Stabilizer genommen, bei denen das zahlenmittlere Molekulargewicht größer als 500 g/mol sind. Ferner sollte das Molekulargewicht der bevorzugten HALS-Verbindungen nicht größer als 10000 g/mol, besonders bevorzugt nicht größer als 5000 g/mol sein.

Besonders bevorzugte Hindered Amine Light Stabilizer sind bis-(1,2,2,6,6-pentamethylpiperidyl) sebacat (Tinuvin® 765, Ciba Spezialitätenchemie AG) und das Kondensationsprodukt aus 1-hydroxyethyl-2,2,6,6-tetramethyl-4-hydroxypiperidin und Succinsäure (Tinuvin® 622). Insbesondere bevorzugt ist das Kondensationsprodukt aus 1-hydroxyethyl-2,2,6,6-tetramethyl-4-hydroxypiperidin and Succinic acid (Tinuvin® 622), wenn der Titangehalt des Produktes < 150 ppm, bevorzugt < 50 ppm, insbesondere < 10 ppm ist.

HALS Verbindungen werden bevorzugt in einer Konzentration von 0,01 bis 5 Gew.-% eingesetzt, besondere bevorzugt von 0,1 bis 1 Gew.-%, insbesondere von 0,15 bis 0,3 Gew.-%.

Eine besonders bevorzugte UV Stabilisierung enthält eine Mischung aus einem phenolischen Stabilisator, einem Benzotriazol und einer HALS-Verbindung in den oben beschriebenen bevorzugten Mengen.

In einer bevorzugten Ausführungsform der Zusammensetzungen sind neben dem Diisocyanat, dem Polyol und dem Kettenverlängerer als Hilfsmittel noch Hydrolyseschutzmittel enthalten, bevorzugt sind hierbei Oligomere und/oder polymere aliphatische oder aromatische Carbodiimide.

Nähere Angaben über die oben genannten Hilfsmittel- und Zusatzstoffe sind der Fachliteratur zu entnehmen, z.B. aus Plastics Additive Handbook, 5th edition, H. Zweifel, ed, Hanser Publishers, München, 2001.

### Herstellung

Die Herstellung der thermoplastischen Polyurethane erfolgt nach bekannten Verfahren diskontinuierlich oder kontinuierlich, bevorzugt mit Reaktionsextrudern oder dem Bandverfahren nach one-shot oder dem Prepolymerverfahren, bevorzugt nach dem one-shot-Verfahren erfolgen. Bei diesen Verfahren können die zur Reaktion kommenden Komponenten Isocynate, Polyole, und gegebenenfalls Kettenverlängerer und/oder Katalysator und/oder Zusatzstoffe und/oder Hilfsmittel nacheinander oder gleichzeitig miteinander vermischt werden, wobei die Reaktion unmittelbar einsetzt. Beim Extruderverfahren werden die Aufbaukomponenten Isocynat, Polyol sowie gegebenenfalls Kettenverlängerer und/oder Zusatzstoff und/oder Hilfsmittel einzeln oder als Gemisch in den Extruder eingeführt, bevorzugt bei Temperaturen von 100 °C bis 280 °C, vorzugsweise 140 °C bis 250 °C zur Reaktion gebracht, das erhaltene Polyurethan wird extrudiert, abgekühlt und granuliert.

Zur Herstellung von weichen thermoplastischen Polyurethanen mit einer Härte Shore A von kleiner als 95, vorzugsweise von 95 Shore A bis 75 Shore A, können die Polyole und Kettenverlängere vorteilhafterweise in Molverhältnissen von 1:1 bis 1:15, vorzugsweise 1:2,5 bis 1:10 verwendet. Zur Herstellung von härteren TPU mit einer Härte von mehr als 98 Shore A, vorzugsweise von 55 Shore D bis 75 Shore D liegen die Molverhältnisse von Polyol zu Kettenverlängerer im Bereich von 1:10 bis 1:20, vorzugsweise von 1:12 bis 1:15, liegen.

Zur Herstellung der erfindungsgemäßen TPU werden die Aufbaukomponenten Diisocyanat und Polyol und gegebenenfalls Katalysatoren und/oder Hilfsmittel und/ oder Zusatzstoffe in solchen Mengen zur Reaktion gebracht, dass das Äquivalenzverhältnis von NCO-Gruppen der Diisocyanate (a) zur Summe der Hydroxylgruppen der Polyole und Kettenverlängerer 0,95 bis 1,10:1, vorzugsweise 0,98 bis 1,08:1 und insbesondere ungefähr 1,0 bis 1,05:1 beträgt.

Die Zusammensetzung wird hergestellt, indem in einem Schritt A thermoplastisches Polyurethan, wie oben beschreiben, hergestellt wird und in einem Schritt B dieses thermoplastische Polyurethan mit einem Salz oder einer ionischen Flüssigkeit, bevorzugt mit einer ionischen Flüssigkeit vermischt wird. Die Zusammensetzung kann weitere Bestanteile enthalten.

In einer Ausführungsform wird die erfindungsgemäße Mischung enthaltend zumindest das thermoplastische Polyurethan und ein Salz und/oder eine ionische Flüssigkeit, bevorzugt eine ionische Flüssigkeit, hergestellt, indem in einem Schritt A das thermoplastische Polyurethan hergestellt wird, in einem Schritt B dieses thermoplastische Polyurethan mit einem Salz und/oder einer ionischen Flüssigkeit, bevorzugt eine mit einer ionischen Flüssigkeit vermischt wird und dann das Produkt aus Schritt A und B, mit einem Polymer vermischt wird.

In einer anderen bevorzugten Ausführungsform wird die erfindungsgemäße Zusammensetzung enthaltend zumindest das thermoplastische Polyurethan und ein Salz und/oder eine ionische Flüssigkeit, bevorzugt eine ionische Flüssigkeit, hergestellt indem in einem Schritt das thermoplastische Polyurethan aus den Komponenten Diisocyanat, Polyol, Kettenverlängerer und ggf. zusätzlich Katalysator, Hilfsstoff und//oder Zusatzstoffen hergestellt wird (Oneshot-Verfahren) und Salz und/oder ionischen Flüssigkeit, bevorzugt nur ionische Flüssigkeit, in demselben Herstellungsschritt zugegeben werden. Diese erfinderische Zusammensetzung wird dann mit einem Polymer vermischt.

Die Zusammensetzung, enthalten zumindest das erfindungsgemäße thermoplastische Polyurethan und ein Salz oder eine ionische Flüssigkeit, ist besonders geeignet, um als Leitfähigkeitsverbesserer in Mischungen mit anderen Polymeren verwendet zu werden.
Polymere besitzen selbst häufig eine unzureichende Leitfähigkeit, wodurch es zu den eingangs geschilderten Nachteile und Gefahren kommen kann.
Durch Zusatz der erfindungsgemäßen Zusammensetzung wird die Leitfähigkeit des Polymers über das gesamte Volumen verbessert und somit die eingangs geschilderten Nachteile bzw. Gefahren deutlich verringert.

### Beispiele

Alle erfindungsgemäßen Zusammensetzungen bzw. Mischungen sowie die Vergleichsproben der antistatischen thermoplastischen Polyurethane (TPU) der Bespiele 1 bis 5 wurden im "One-shot"-Verfahren auf einem Reaktionsextruder hergestellt. Dabei wurden alle Bestandteile der Zusammensetzung in den Reaktionsextruder gegeben.
Gleichermaßen lassen sich die Materialien im Gießverfahren herstellen. Die nachträgliche Einarbeitung des Salzes und/oder der ionischen Flüssigkeit durch Einquellen oder Compoundieren, d.h. einmischen des Salzes und/oder der ionischen Flüssigkeit in das aufgeschmolzene thermoplastische Polyurethan (TPU), führt zu vergleichbaren Ergebnissen.

Die Herstellung der Zusammensetzungen, bzw. Mischungen, erfolgte auf einem handelsüblichen Doppelschneckenextruder, hier einer Coperion ZSK, bei den für TPU üblichen Prozesstemperaturen von 160 °C bis 240°C, wie in EP 1846465 oder EP1213307 beschrieben. Die Mengen der einzelnen Bestandteile werden als Gewichtsteile (GT) angegeben.

### Beispiel 1, Herstellung eines antistatischen, aromatischen, thermoplastischen Poly-urethans (Vergleich 1)

Die Zusammenestzung (= 100 GT), besteht aus 37 GT 4,4'-Methylenbisphenylisocyanat (MDI), 10,2 GT 1,4-Butandiol und 51,3 GT Polyethylenglykol (PEG) mit einem zahlenmittleren Molekulargewicht (Mn) 1,5 x 10³ g/mol wird in einem Reaktionsextruder zu einem thermoplastischen Polyurethan (TPU) synthetisiert. Mit enthalten sind 1 Gewichtsteil eines 1-Imidazolium-1-ethyl-3-methyl-ethylsulfat, (EMIM ETOSO₃) und 0,5 GT einer massenäquivalenten Mischung aus Antioxidanz (AO, gehindertes Phenol aus Pentaerythritol und di-tert.-butyl-hydroxyphenylpropionat), Hindered Amine Light Stabilizer (HALS, Kondensationsprodukt aus 1-Hydroxyethyl-2,2,6, 6-tetramethyl-4-hy-droxypiperidin und Bernsteinsäure), UV-Filter(2-(2H-Benzotriazol-2-yl)-4,6-bis(1-methyl-1-phenylethyl)phenol) und Gleitmittel (Montansäureester) enthalten.

### Beispiel 2, Herstellung eines antistatischen, aliphatischen, thermoplastischen Polyurethans (Vergleich 2)

Die Zusammensetzung (= 100GT), bestehend aus 21,4 GT Hexamethylendiisocyanat (HDI), 7,4 GT 1,6-Hexandiol und 66,7 GT Polytetramethylenglykol (PTMG) mit einem zahlenmittleren Molekulargewicht (Mₙ)1,0 x 10³ g/mol wird in einem Reaktionsextruder zu einem thermoplastischen Polyurethan (TPU) synthetisiert. Mit eingearbeitet werden 4 Gewichtsteile eines 1-Imidazolium-1-ethyl-3-methyl-ethylsulfat, (EMIM ETOSO₃) und 0,5 GT einer massenäquivalenten Mischung aus Antioxidanz (AO, gehindertes Phenol aus Pentaerythritol und di-tert.-butyl-hydroxyphenylpropionat), Hindered Amine Light Stabilizer (HALS, Kondensationsprodukt aus 1-Hydroxyethyl-2,2,6, 6-tetramethyl-4-hy- droxypiperidin und Bernsteinsäure), UV-Filter(2-(2H-Benzotriazol-2-yl)-4,6-bis(1-methyl-1-phenylethyl)phenol) und Gleitmittel (Montansäureester) enthalten.

### Beispiel 3, Herstellung eines antistatischen, aliphatischen, thermoplastischen Polyurethans(Vergleich 3)

Die Zusammensetzung (= 100GT), bestehend aus 21,2 GT Hexamethylendiisocyanat (HDI), 9,9 GT1,6-Hexandiol und 64,4 GT eines Polymerdiols der Molmasse 1,5 x 10³ g/mol aus Polyethylenglykol (PEG) wird in einem Reaktionsextruder zu einem thermoplastischen Polyurethan (TPU) synthetisiert. Mit enthalten sind 4 Gewichtsteile eines 1-Imidazolium-1-ethyl-3-methyl-ethylsulfat, (kurz EMIM ETOSO3) und 0,5 GT einer massenäquivalenten Mischung aus Antioxidanz (AO, gehindertes Phenol aus Pentaerythritol und di-tert.-butyl-hydroxyphenylpropionat), Hindered Amine Light Stabilizer (HALS, Kondensationsprodukt aus 1-Hydroxyethyl-2,2,6, 6-tetramethyl-4-hy-droxypiperidin und Bernsteinsäure), UV-Filter(2-(2H-Benzotriazol-2-yl)-4,6-bis(1-methyl-1-phenylethyl)phenol) und Gleitmittel (Montansäureester) enthalten.

### Beispiel 4, Herstellung eines antistatischen, aliphatischen, thermoplastischen Polyurethans, (erfindungsgemäßer Ansatz 1)

Die Zusammensetzung (= 100 GT), bestehend aus 19,9 GT Hexamethylendiisocyanat (HDI), 10,2 GT 1,6-Hexandiol und 52,2 GT eines difunktionellen Polymerdiols mit einem zahlenmittleren Molekulargewicht 2,25 x 10³ g/mol aus einer Mischung Polypropylenoxid und Polyethylenoxid (kurz PPG-PEG, 1:4, statistisches Mischpolymer mit primärfunktionellen Endgruppen) und 13,2 GT eines Polytetramethylenglykol (kurz PTMG) mit dem zahlenmittleren Molekulargewicht 2,0 x 10³ g/mol werden in einem Reaktionsextruder zu einem thermoplastischen Polyurethan (TPU) synthetisiert. Mit enthalten sind 4 Gewichtsteile eines 1-Imidazolium-1-ethyl-3-methyl-ethylsulfat, (kurz EMIM ETOSO₃) und 0,5 GT einer massenäquivalenten Mischung aus Antioxidanz (AO, gehindertes Phenol aus Pentaerythritol und di-tert.-butyl-hydroxyphenylpropionat), Hindered Amine Light Stabilizer (HALS, Kondensationsprodukt aus 1-Hydroxyethyl-2,2,6, 6-tetramethyl-4-hy-droxypiperidin und Bernsteinsäure), UV-Filter(2-(2H-Benzotriazol-2-yl)-4,6-bis(1-methyl-1-phenylethyl)phenol) und Gleitmittel (Montansäureester) enthalten.

### Beispiel 5 Herstellung eines antistatischen thermoplastischen Polyurethans auf Basis eines aromatischen Isocyanats (Vergleich 4)

Die Zusammensetzung (= 100 GT), bestehend aus 30,5 GT 4,4'-Methylenbisphenylisocyanat (MDI), 8,5 GT1,4-Butandiol und 45,2 GT eines difunktionellen Polymerdiols mit einem zahlenmittleren Molekulargewicht 2,25 x 10³ g/mol aus einer Mischung Polypropylenoxid und Polyethylenoxid (kurz PPG-PEG, 1:4, statistisches Mischpolymer mit primärfunktionellen Endgruppen) und 11,3 GT eines Polymerdiols der Molmasse 2,0 x 10³ g/mol aus Polytetramethylenglykol (kurz PTMG) werden in einem Reaktionsextruder zu einem thermoplastischen Polyurethan (TPU) synthetisiert. Mit enthalten sind 4 Gewichtsteile eines 1-Imidazolium-1-ethyl-3-methyl-ethylsulfat, (kurz EMIM ETOSO3) und 0,5 GT einer massenäquivalenten Mischung aus Antioxidanz (AO, gehindertes Phenol aus Pentaerythritol und di-tert.-butyl-hydroxyphenylpropionat), Hindered Amine Light Stabilizer (HALS, Kondensationsprodukt aus 1-Hydroxyethyl-2,2,6, 6-tetramethyl-4-hy- droxypiperidin und Bernsteinsäure), UV-Filter(2-(2H-Benzotriazol-2-yl)-4,6-bis(1-methyl-1-phenylethyl)phenol) und Gleitmittel (Montansäureester) enthalten.

### Beispiel 6 Herstellung eines antistatischen thermoplastischen Polymerblends (Vergleich 5)

Als weiterer Vergleich wurde ein Polymerblend auf einem handelsüblichen Compoundierextruder hergestellt, wobei ein Polyetheresteramid, hier Pebax 1657 (Fa. Arkema, FR), , Polyamid-12, hier Rilsan PA12 (Fa. Arkema), und einem Salz, hier NaClO₄ und einem UV-Stabilisator-Paket vermischt wurden, wobei die genannten Bestandteile in der aufgeführten Reihenfolge nachfolgenden Gewichtsanteilverhältnis zugegeben wurden(4,7 : 4,8 : 0,2 : 0,3),

### Beispiel 7, Herstellung eines antistatischen, aliphatischen, thermoplastischen Polyurethans, (erfindungsgemäßer Ansatz 2)

Die Zusammensetzung (= 100 GT), bestehend aus 40,1 GT Hexamethylendiisocyanat (HDI), 20 GT 1,4-Butandiol und 24,4 GT eines difunktionellen Polymerdiols mit einem zahlenmittleren Molekulargewicht 2,25 x 10³ g/mol aus einer Mischung Polypropylenoxid und Polyethylenoxid (kurz PPG-PEG, 1:4, statistisches Mischpolymer mit primärfunktionellen Endgruppen) und 10,5 GT eines Polytetramethylenglykol (kurz PTMG) mit dem zahlenmittleren Molekulargewicht 2,0 x 10³ g/mol werden in einem Reaktionsextruder zu einem thermoplastischen Polyurethan (TPU) synthetisiert. Mit enthalten sind 4 Gewichtsteile eines 1-Imidazolium-1-ethyl-3-methyl-ethylsulfat, (kurz EMIN ETOSO₃) und 0,95 GT einer massenäquivalenten Mischung aus Antioxidanz (AO, gehindertes Phenol aus Pentaerythritol und di-tert.-butyl-hydroxyphenylpropionat), Hindered Amine Light Stabilizer (HALS, Kondensationsprodukt aus 1-Hydroxyethyl-2,2,6, 6-tetramethyl-4-hy- droxypiperidin und Bernsteinsäure), UV-Filter(2-(2H-Benzotriazol-2-yl)-4,6-bis(1-methyl-1-phenylethyl)phenol) und Gleitmittel (Montansäureester) enthalten.

### Beispiel 8, Herstellung eines antistatischen, aliphatischen, thermoplastischen Polyurethans, (erfindungsgemäßer Ansatz 3)

Die Zusammensetzung (= 100 GT), bestehend aus 20,5 GT Hexamethylendiisocyanat (HDI), 8 GT 1,6-Hexandiol, 1,7 GT 1,3-Propandiol und 52,2GT eines difunktionellen Polymerdiols mit einem zahlenmittleren Molekulargewicht 2,25 x 10³ g/mol aus einer Mischung Polypropylenoxid und Polyethylenoxid (kurz PPG-PEG, 1:4, statistisches Mischpolymer mit primärfunktionellen Endgruppen) und 13 GT eines Polytetramethylenglykol (kurz PTMG) mit dem zahlenmittleren Molekulargewicht 2,0 x 10³ g/mol werden in einem Reaktionsextruder zu einem thermoplastischen Polyurethan (TPU) synthetisiert. Mit enthalten sind 3,5 Gewichtsteile eines 1-Imidazolium-1-ethyl-3-methyl-ethylsulfat, (kurz EMIN ETOSO₃) und 0,95 GT einer massenäquivalenten Mischung aus Antioxidanz (AO, gehindertes Phenol aus Pentaerythritol und di-tert.-butyl-hydroxyphenylpropionat), Hindered Amine Light Stabilizer (HALS, Kondensationsprodukt aus 1-Hydroxyethyl-2,2,6, 6-tetramethyl-4-hy- droxypiperidin und Bernsteinsäure), UV-Filter(2-(2H-Benzotriazol-2-yl)-4,6-bis(1-methyl-1-phenylethyl)phenol) und Gleitmittel (Montansäureester) enthalten.

### Beispiel 9, Herstellung eines antistatischen, aliphatischen, thermoplastischen Polyurethans, (erfindungsgemäßer Ansatz 4)

Die Zusammensetzung (= 100 GT), bestehend aus 21,1 GT Hexamethylendiisocyanat (HDI), 2,7 GT 1,6-Hexandiol, 6,4 GT 1,4-Butandiol und 52,2GT eines difunktionellen Polymerdiols mit einem zahlenmittleren Molekulargewicht 2,25 x 10³ g/mol aus einer Mischung Polypropylenoxid und Polyethylenoxid (kurz PPG-PEG, 1:4, statistisches Mischpolymer mit primärfunktionellen Endgruppen) und 13 GT eines Polytetramethylenglykol (kurz PTMG) mit dem zahlenmittleren Molekulargewicht 2,0 x 10³ g/mol werden in einem Reaktionsextruder zu einem thermoplastischen Polyurethan (TPU) synthetisiert. Mit enthalten sind 3,5 Gewichtsteile eines 1-Imidazolium-1-ethyl-3-methyl-ethylsulfat, (kurz EMIN ETOSO₃) und 0,95 GT einer massenäquivalenten Mischung aus Antioxidanz (AO, gehindertes Phenol aus Pentaerythritol und di-tert.-butyl-hydroxyphenylpropionat), Hindered Amine Light Stabilizer (HALS, Kondensationsprodukt aus 1-Hydroxyethyl-2,2,6, 6-tetramethyl-4-hy- droxypiperidin und Bernsteinsäure), UV-Filter(2-(2H-Benzotriazol-2-yl)-4,6-bis(1-methyl-1-phenylethyl)phenol) und Gleitmittel (Montansäureester) enthalten.

**Tab.1 Übersicht der Rezepturen der antistatischen thermoplastischen Polyurethane**

| **Versuchsnummer** | Beispiel 1 | Beispiel 2 | Beispiel 3 | Beispiel 4 | Beispiel 5 | Beispiel 6 | Beispiel 7 | Beispiel 8 | Beispiel 9 |
|---|---|---|---|---|---|---|---|---|---|
| **Rezeptur** | Vergleich 1 | Vergleich 2 | Vergleich 3 | erfindungsgemäßer Ansatz 1 | Vergleich 4 | Vergleich 5 | erfindungsgemäßer Ansatz 2 | erfindungsgemäßer Ansatz 3 | erfindungsgemäßer Ansatz 4 |
| **PTMG, Mn=1,0x10³g/mol** | | 66,7 | | | | | | | |
| **PTMG, Mn=2,0x10³g/mol** | | | | 13,2 | 11,3 | | 10,5 | 13 | 13 |
| **PEG, Mn=1,5x10³ g/mol** | 51,3 | | 64,4 | | | | | | |
| **PEG-PPG, Mn=2,25x10³g/mol** | | | | 52,2 | 45,2 | | 24,4 | 52,1 | 52,1 |
| **MDI** | 37,0 | | | | 30,5 | | | | |
| **HDI** | | 21,4 | 21,2 | 19,9 | | | 40,1 | 20,5 | 21,1 |
| **1.6-Hexandiol** | | | 9,9 | 10,2 | | | | 8 | 2,7 |
| **1.4-Butandiol** | 10,2 | 7,4 | | | 8,5 | | 20 | | 6,4 |
| **1,3 Propandiol** | | | | | | | | 1,7 | |
| EMIM ETSO4 | 1,0 | 4,0 | 4,0 | 4,0 | 4,0 | | 4 | 3,5 | 3,5 |
| massenäquivalente Mischg. | 0,5 | 0,5 | 0,5 | 0,5 | 0,5 | | 0,95 | 1,2 | 1,2 |
| aus AO, HALS, UV und Wachs | | | | | | | | | |
| **Polymerblend, Referenz** | | | | | | 100 | | | |

Aus den unter Beispiel 1 bis 9 beschriebenen Zubereitungen wurden im Spritzguß auf einer Spritzgußmaschine, hier einer Aarburg 420C, zu 110x100x2 mm Prüfkörpern, auch Prüfplatten genannt, umgeformt. Das TPU-Granulat wurde vorab für 3 h bei 110 °C vorgetrocknet. Die maximale Temperatur der Schmelze in der Prüfkörperherstellung lag bei 210 °C bis 220 °C.

Die Prüfkörper wurden zur besseren Vergleichbarkeit nach der Herstellung erst 15 Stunden bei 100°C und dann weitere 72(+/-10) Stunden im Raumklima bei 23 °C und 50 % relativer Luftfeuchte gelagert.

Die Beurteilung der antistatischen Eigenschaften erfolgte nach DIN IEC 60093 (Widerstandsmessung). Auf die Prüfplatten wurden mit Leitsilber 5 cm lange Elektroden im Abstand von 0,5 cm aufgetragen und der spezifische Oberflächenwiderstand nach IEC 60093 bestimmt. Die Bestimmung des spezifischen Oberflächenwiderstandes erfolgte an nicht getemperten Prüfplatten im Normklima bei 23°C und 50 % relativer Raumfeuchte.

Folgend werden die elektrischen Eigenschaften der reinen TPU aufgeführt. Auf die Prüfplatten wurden mit Leitsilber 5 cm lange Elektroden im Abstand von 0,5 cm aufgetragen und der spezifische Oberflächenwiderstand nach IEC 60093 bestimmt. Die Bestimmung des spezifischen Oberflächenwiderstandes in den Beispielen 1 bis 6 erfolgte an nicht getemperten Prüfplatten im Normklima bei 23°C und 50% relativer Raumfeuchte.

**Tab. 2 Übersicht der elektrischen Eigenschaften zu den Rezepturen der antistatischen thermoplastischen Polyurethane und des Polymergemisches aus Tabelle1**

| **Beispielnummer** | | | Beispiel 1 | Beispiel 2 | Beispiel 3 | Beispiel 4 | Beispiel 5 | Beispiel 6 | Beispiel 7 | Beispiel 8 | Beispiel 9 |
|---|---|---|---|---|---|---|---|---|---|---|---|
| **Rezeptur** | | | Vergleich 1 | Vergleich 2 | Vergleich 3 | erfindungsgemäßer Ansatz 1 | Vergleich 4 | Vergleich 5 | erfindungsgemäßer Ansatz 2 | erfindungsgemäßer Ansatz 3 | erfindungsgemäßer Ansatz 4 |
| Prüfung der elektrischen Eigenschaften | Norm | Einheit | Ergebnis | Ergebnis | Ergebnis | Ergebnis | Ergebnis | Ergebnis | Ergebnis | Ergebnis | Ergebnis |
| spez. Oberflächenwiderstand | IEC 60093 mit Leitsilberelektroden mit Gegenelektrode | Ohm | 9,60E+06 | 3,70E+08 | 9,60E+06 | 2,30E+06 | 1.10E+08 | 4,40E+07 | 3,40E+07 | 2,90E+07 | 2,00E+07 |
| spez. Oberflächenwiderstand | IEC 60093 mit Leitsilberelektroden ohne Gegenelektrode | Ohm | 3,60E+05 | 1,30E+08 | 3,50E+05 | 8,80E+05 | 3,50E+06 | 5,90E+06 | 2,70E+06 | 6,80E+05 | 6,60E+05 |

### Beschreiben des Vorgehens zu Beispielen 10 bis 54 - antistatische Compounds

Die unter Beispiel 1 bis 9 beschriebenen, als Leitfähigkeitsvermittler dienenden, antistatischen thermoplastischen Polyurethane bzw. das Polymerblend, die als Granulate vorlagen, wurden zu 15 Gewichts-% in den im Folgenden beschriebenen Polymeren, die ebenfalls als Granulat vorlagen, zugemischt und als Dryblend, d.h. als Granulatmischung im Spritzguß auf einer Aarburg 420C Spritzgußmaschine bei geeigneter Temperatur zu 110x100x2mm Prüfkörpern, auch Prüfplatten genannt, umgeformt. Der Dryblend wird auch Compound genannt.Die Granulate der antistatischen, thermoplastischen Polymere aus Beispiel 1 bis 9 wurden vorab für 3 h bei 110°C vorgetrocknet. Die maximale Temperatur der Schmelze in der Prüfkörperherstellung lag bei 210°C bis 230°C.

Die Prüfkörper wurden zur besseren Vergleichbarkeit nach der Herstellung 72(+/-10) Stunden im Raumklima bei 23°C und 50% relativer Luftfeuchte gelagert.

Aus den so erhaltenen Probekörpern wurden S2-Prüfstäbe , gemäß DIN 53504, Okt.2009, ausgestanzt. Die mechanischen Prüfungen erfolgten nach DIN ISO 7619,Teil1, Febr-2012, (Shore), 53504, Okt.2009 (Zugfestigkeit, Dehnung), DIN EN ISO 1183-1A, Apr.-2013 (Dichte), DIN ISO 34-1, B (b),Juli-2004 (Weiterreißfestigkeit) und DIN EN ISO 179-1,Januar-2001 (Kälteschlagzähigkeit).

Die Beurteilung der antistatischen Eigenschaften erfolgte nach DIN IEC 60093 (Widerstandsmessung). Auf die Prüfplatten wurden 5 cm lange Haftelektroden, hier Leitsilber, im Abstand von 0,5 cm aufgetragen und der spezifische Oberflächenwiderstand, sowie der spezifische

Durchgangswiderstand nach IEC 60093 bestimmt. Die Bestimmung der Widerstände erfolgte bei 23°C und 50% relativer Raumfeuchte

Die Kompatibilität zum Substrat wurde anhand der visuellen Beurteilung der Prüfplatten vor und nach einem Biegeversuch an den oben beschriebenen Prüfkörpern ermittelt. Dazu wurde die Prüfplatte sowohl längs als auch quer zur Fließrichtung der Schmelze um 180° geknickt, so dass sich die gegenüberliegenden Seiten der Prüfplatte berührten. Es erfolgte eine visuelle Beurteilung, die je nach Verträglichkeit zum Substrat mit einem "+" für gute Verträglichkeit, einem "o" für mittlere Verträglichkeit und einem "-" für Unverträglichkeit ausgewertet wurden.

Gute Verträglichkeit bedeutet, die Prüfplatte zeigt ein homogenes Erscheinungsbild und führt nach dem Biegen zu keinen oder nur zu geringen Delaminierungen ohne Bruch. Mittlere Verträglichkeit bedeutet, die Prüfplatte zeigt ein inhomogenes Erscheinungsbild und führt nach dem Biegen zu Delaminierungen ohne Bruch. Unverträglichkeit bedeutet, die Prüfplatte zeigt ein stark inhomogenes Erscheinungsbild sowie Delaminierungen und führt nach dem Biegen zu starken Delaminierungen und Bruch.

Alle Ergebnisse werden im Folgenden, nach Substrat unterteilt, d.h. dem Polymer in das der Leitfähigkeitsvermittler zugegeben wurde, tabellarisch aufgeführt.

Unter Beispiel 10 bis 18 und Tabelle 3 erfolgte dieses für Polypropylen(PP). Unter Beispiel 19 bis 27, und Tabelle 4 erfolgte dieses für Polystyrol(PS). Unter Beispiel 28 bis 36 und Tabelle 5 erfolgte dieses für Polyethylen(PE). Unter Beispiel 37 bis 45 und Tabelle 6 erfolgte dieses für Poly-oxymethylen(POM). Unter Beispiel 46 bis 54 und Tabelle 7 erfolgte dieses für Poly-vinyl-chlorid(PVC).

### Beispiel 10 bis 18, Herstellung und Beurteilung antistischer Polypropylen-Compounds

### Beispiel 10, Herstellung der Referenz-Probe auf Basis eines reinen Polypropylen

1.600 g Polypropylen, HD 120 MO der Fa. Borealis wurden im Spritzguß, unter vorabbeschriebenen Bedingungen, zu 110x100x2 mm Prüfkörpern umgeformt, konditioniert und geprüft. Die Meßwerte sind in Tabelle 3 aufgeführt.

### Beispiel 11, Herstellung eines antistatischen Polypropylen-Compounds mit TPU gemäß Beispiel 2 (Vergleich2)

1.360 g Polypropylen, HD 120 MO der Fa. Borealis wurden mit 240 g des unter Beispiel 2 beschriebenen TPU abgemischt und als Dryblend, d.h. als Granulatmischung im Spritzguß, unter vorabbeschriebenen Bedingungen zu 110x100x2 mm Prüfkörpern umgeformt, konditioniert und geprüft. Die Meßwerte sind in Tabelle 3 aufgeführt.

### Beispiel 12, , Herstellung eines Polypropylen-Compounds mit antistatischem TPU gemäß Beispiel 3 (Vergleich3)

1.360 g Polypropylen, HD 120 MO der Fa. Borealis wurden mit 240 g des unter Beispiel 3 beschriebenen antistatischen TPU abgemischt und als Dryblend, d.h. als Granulatmischung im Spritzguß, unter vorabbeschriebenen Bedingungen, zu 110x100x2 mm Prüfkörpern umgeformt, konditioniert und geprüft. Die Meßwerte sind in Tabelle 3 aufgeführt.

### Beispiel 13, Herstellung eines Polypropylen-Compounds mit antistatischem TPU gemäß Beispiel 4 (erfindungsgemäßer Ansatz 1)

1.360 g Polypropylen, HD 120 MO der Fa. Borealis wurden mit 240 g des unter Beispiel 4 beschriebenen antistatischen TPU abgemischt und als Dryblend, d.h. als Granulatmischung im Spritzguß, unter vorabbeschriebenen Bedingungen, zu 110x100x2mm Prüfkörpern umgeformt, konditioniert und geprüft. Die Meßwerte sind in Tabelle 3 aufgeführt.

### Beispiel 14, Herstellung eines Polypropylen-Compounds mit antistatischem TPU gemäß Beispiel 5 (Vergleich4)

1.360 g Polypropylen, HD 120 MO der Fa. Borealis wurden mit 240 g des unter Beispiel 5 beschriebenen antistatischen TPU abgemischt und als Dryblend, d.h. als Granulatmischung im Spritzguß, unter vorabbeschriebenen Bedingungen, zu 110x100x2 mm Prüfkörpern umgeformt, konditioniert und geprüft. Die Meßwerte sind in Tabelle 3 aufgeführt.

### Beispiel 15, Herstellung eines Polypropylen-Compounds mit antistatischem Polymerblend gemäß Beispiel 6 (Vergleich5)

1.360 g Polypropylen, HD 120 MO der Fa. Borealis wurden mit 240 g des unter Beispiel 6 beschriebenen antistatischen Polymerblends abgemischt und als Dryblend, d.h. als Granulatmischung im Spritzguß, unter vorabbeschriebenen Bedingungen, zu 110x100x2 mm Prüfkörpern umgeformt, konditioniert und geprüft. Die Meßwerte sind in Tabelle 3 aufgeführt.

### Beispiel 16, Herstellung eines Polypropylen-Compounds mit antistatischem TPU gemäß Beispiel 7 (erfindungsgemäßer Ansatz 2)

1.360 g Polypropylen, HD 120 MO der Fa. Borealis wurden mit 240 g des unter Beispiel 7 beschriebenen antistatischen TPU abgemischt und als Dryblend, d.h. als Granulatmischung im Spritzguß, unter vorabbeschriebenen Bedingungen, zu 110x100x2mm Prüfkörpern umgeformt, konditioniert und geprüft. Die Meßwerte sind in Tabelle 3 aufgeführt.

### Beispiel 17, Herstellung eines Polypropylen-Compounds mit antistatischem TPU gemäß Beispiel 8 (erfindungsgemäßer Ansatz 3)

1.360 g Polypropylen, HD 120 MO der Fa. Borealis wurden mit 240 g des unter Beispiel 8 beschriebenen antistatischen TPU abgemischt und als Dryblend, d.h. als Granulatmischung im Spritzguß, unter vorabbeschriebenen Bedingungen, zu 110x100x2mm Prüfkörpern umgeformt, konditioniert und geprüft. Die Meßwerte sind in Tabelle 3 aufgeführt.

### Beispiel 18, Herstellung eines Polypropylen-Compounds mit antistatischem TPU gemäß Beispiel 9 (erfindungsgemäßer Ansatz 4)

1.360 g Polypropylen, HD 120 MO der Fa. Borealis wurden mit 240 g des unter Beispiel 9 beschriebenen antistatischen TPU abgemischt und als Dryblend, d.h. als Granulatmischung im Spritzguß, unter vorabbeschriebenen Bedingungen, zu 110x100x2mm Prüfkörpern umgeformt, konditioniert und geprüft. Die Meßwerte sind in Tabelle 3 aufgeführt.

**Tab.3 Übersicht der mechanischen und elektrischen Eigenschaften sowie der Verträglichkeit der antistatischen TPU, bzw. des Polymerblend aus Tab.1 in Polypropylen (HD 120 MO, Fa. Borealis)**

| **fortlaufende Bezeichnung** | | | | | Beispiel 10 | Beispiel 11 | Beispiel 12 | Beispiel 13 | Beispiel 14 | Beispiel 15 | Beispiel 16 | Beispiel 17 | Beispiel 18 |
|---|---|---|---|---|---|---|---|---|---|---|---|---|---|
| **TPU-Rezeptur** | | | | | | Vergleich 2 | Vergleich 3 | erfindungsgemäßer Ansatz 1 | Vergleich 4 | Vergleich 5 | erfindungsgemäßer Ansatz 2 | erfindungsgemäßer Ansatz 3 | erfindungsgemäßer Ansatz 4 |
| Prüfung | Norm | | | Einheit | Ergebnis | Ergebnis | Ergebnis | Ergebnis | Ergebnis | Ergebnis | Ergebnis | Ergebnis | Ergebnis |
| **Mechank** | | | | | | | | | | | | | |
| Dichte | DIN EN ISO 1183-1A | | | g/cm3 | 0,904 | 0,92 | 0,928 | 0,924 | 0,934 | 0,93 | 0,931 | 0,926 | 0,926 |
| Shore-Härte D | ISO 7619,Teil1 | | | | 75 | 71 | 68 | 68 | 65 | 72 | 72 | 70 | 69 |
| Zugfestigkeit | DIN 53504 | | | MPas | 38 | 33 | 32 | 33 | 31 | 37 | 35 | 34 | 33 |
| Reißdehnung | | | | % | 20 | 20 | 10 | 10 | 20 | 10 | 220 | 460 | 470 |
| Weiterreißfestigkeit | DIN ISO 34-1, B (b | | | kN/m | 159 | 222 | 157 | 238 | 189 | 198 | 199 | 183 | 216 |

| **Erweiterte Mechanik** | | | | | | | | | | | | | |
|---|---|---|---|---|---|---|---|---|---|---|---|---|---|
| Charpy-Schlagzähigkeit 23°C | DIN EN ISO 179-1/1eU | | | kJ/m2 | 121 | 124 | 26,2 | | | 108 | 57,8 | 65,9 | 65,6 |
| Bruch | | | | | ja | ja | ja | nein | nein | ja | ja | ja | ja |
| Charpy-Schlagzähigkeit -30°C | DIN EN ISO 179-1/1eU | | | kJ/m2 | 18,3 | 21,3 | 11,9 | 22,7 | 21,7 | 20 | 17,7 | 21,5 | 22,4 |
| Bruch | | | | | ja | ja | ja | ja | ja | ja | ja | ja | ja |
| Charpy-Kerbschlagzähigkeit 23°C | DIN EN ISO 179-1/1eA | | | kJ/m2 | 3,2 | 4,3 | 4,6 | 5,1 | 4,7 | 4 | 4,4 | 5,5 | 5,9 |
| Bruch | | | | | ja | ja | ja | ja | ja | ja | ja | ja | ja |
| Charpy-Kerbschlagzähigkeit -30°C | DIN EN ISO 179-1/1eA | | | kJ/m2 | 2,8 | 2,9 | 2,8 | 2,9 | 2,7 | 2,9 | 2,9 | 3,2 | 4,1 |
| Bruch | | | | | ja | ja | ja | ja | ja | ja | ja | ja | ja |

| **elekrische Eigenschaften** | | | | | | | | | | | | | |
|---|---|---|---|---|---|---|---|---|---|---|---|---|---|
| spez. Durchgangswiderstand | DIN IEC 60093 | | | Ohm* cm | R maxi | 2,30E +13 | 8,80E +10 | 6,30E +10 | 4,40E +11 | 2,50E +10 | 9,20E +11 | 3,90E +10 | 2,50E +10 |
| spez.Oberflächenwiders tand | DIN IEC 60093 | | | Ohm | 1,50E +16 | 7,80E +13 | 1,40E +11 | 2,00E +11 | 1,30E +12 | 1,80E +12 | 2,40E +10 | 1,30E +11 | 2,80E +09 |
| mit GE | | | | | | | | | | | | | |
| spez.Oberflächenwiders tand | DIN IEC 60093 | | | Ohm | 2,10E +14 | 3,40E +13 | 8,20E +11 | 9,80E +10 | 4,50E +11 | 1,20E +11 | 6,00E +10 | 3,20E +11 | 3,20E +09 |
| ohne GE | | | | | | | | | | | | | |

| **Auswertung/ Beurteilung:** | | | | | | | | | | | | | |
|---|---|---|---|---|---|---|---|---|---|---|---|---|---|
| **Optik der Spritzplatte** | | | | | **+** | **-** | **○** | **+** | **-** | **+** | **+** | **+** | **+** |
| **Bruchverhalten** | längs der Spritzrichtung | | | | **-** | **-** | **-** | **-** | **-** | **-** | **-** | **-** | **+** |
| **Bruchverhalten** | quer zur Spritzrichtung | | | | **+** | **○** | **○** | **+** | **○** | **○** | **+** | **+** | **+** |

### Beispiel 19 bis 27, Herstellung und Beurteilung antistischer Polystyrol-Compounds

### Beispiel 19, Herstellung der Referenz-Probe auf Basis eines reinen Polystyrols

1.600 g Polystyrol, Styron 485 der Fa. Styron wurden im Spritzguß, unter vorabbeschriebenen Bedingungen, zu 110x100x2mm Prüfkörpern umgeformt, konditioniert und geprüft. Die Meßwerte sind in Tabelle 4 aufgeführt.

### Beispiel 20, Herstellung eines antistatischen Polystyrol-Compounds mit TPU gemäß Beispiel 2 (Vergleich 2)

1.360 g Polystyrol, Styron 485 der Fa. Styron wurden mit 240 g des unter Beispiel 2 beschriebenen TPU abgemischt und als Dryblend, d.h. als Granulatmischung im Spritzguß, unter vorabbeschriebenen Bedingungen, zu 110x100x2 mm Prüfkörpern umgeformt, konditioniert und geprüft. Die Meßwerte sind in Tabelle 4 aufgeführt.

### Beispiel 21, Herstellung eines antistatischen Polystyrol-Compounds mit TPU gemäß Beispiel 3 (Vergleich 3)

1.360 g Polystyrol, Styron 485 der Fa. Styron wurden mit 240 g des unter Beispiel 3 beschriebenen TPU abgemischt und als Dryblend, d.h. als Granulatmischung im Spritzguß, unter vorabbeschriebenen Bedingungen, zu 110x100x2 mm Prüfkörpern umgeformt, konditioniert und geprüft. Die Meßwerte sind in Tabelle 4 aufgeführt.

### Beispiel 22, Herstellung eines antistatischen Polystyrol-Compounds mit TPU gemäß Beispiel 4 (erfindungsbemäße Ansatz 1)

1.360 g Polystyrol, Styron 485 der Fa. Styron wurden mit 240 g des unter Beispiel 4 beschriebenen antistatischen TPU abgemischt und als Dryblend, d.h. als Granulatmischung im Spritzguß, unter vorabbeschriebenen Bedingungen, zu 110x100x2 mm Prüfkörpern umgeformt, konditioniert und geprüft. Die Meßwerte sind in Tabelle 4 aufgeführt.

### Beispiel 23, Herstellung eines antistatischen Polystyrol-Compounds mit TPU gemäß Beispiel 5 (Vergleich 4)

1.360 g Polystyrol, Styron 485 der Fa. Styron wurden mit 240g des unter Beispiel 5 beschriebenen antistatischen TPU abgemischt und als Dryblend, d.h. als Granulatmischung im Spritzguß, unter vorabbeschriebenen Bedingungen, zu 110x100x2mm Prüfkörpern umgeformt, konditioniert und geprüft. Die Meßwerte sind in Tabelle 4 aufgeführt.

### Beispiel 24, Herstellung eines antistatischen Polystyrol-Compounds mit Polymerblend gemäß Beispiel 6 (Vergleich5)

1.360 g Polystyrol, Styron 485 der Fa. Styron wurden mit 240g des unter Beispiel 6 beschriebenen antistatischen Polymerblends abgemischt und als Dryblend, d.h. als Granulatmischung im Spritzguß, unter vorabbeschriebenen Bedingungen, zu 110x100x2mm Prüfkörpern umgeformt, konditioniert und geprüft. Die Meßwerte sind in Tabelle 4 aufgeführt.

### Beispiel 25, Herstellung eines antistatischen Polystyrol-Compounds mit TPU gemäß Beispiel 7 (erfindungsbemäße Ansatz 2)

1.360 g Polystyrol, Styron 485 der Fa. Styron wurden mit 240 g des unter Beispiel 7 beschriebenen antistatischen TPU abgemischt und als Dryblend, d.h. als Granulatmischung im Spritzguß, unter vorabbeschriebenen Bedingungen, zu 110x100x2 mm Prüfkörpern umgeformt, konditioniert und geprüft. Die Meßwerte sind in Tabelle 4 aufgeführt.

### Beispiel 26, Herstellung eines antistatischen Polystyrol-Compounds mit TPU gemäß Beispiel 8 (erfindungsbemäße Ansatz 3)

1.360 g Polystyrol, Styron 485 der Fa. Styron wurden mit 240 g des unter Beispiel 8 beschriebenen antistatischen TPU abgemischt und als Dryblend, d.h. als Granulatmischung im Spritzguß, unter vorabbeschriebenen Bedingungen, zu 110x100x2 mm Prüfkörpern umgeformt, konditioniert und geprüft. Die Meßwerte sind in Tabelle 4 aufgeführt.

### Beispiel 27, Herstellung eines antistatischen Polystyrol-Compounds mit TPU gemäß Beispiel 9 (erfindungsbemäße Ansatz 4)

1.360 g Polystyrol, Styron 485 der Fa. Styron wurden mit 240 g des unter Beispiel 9 beschriebenen antistatischen TPU abgemischt und als Dryblend, d.h. als Granulatmischung im Spritzguß, unter vorabbeschriebenen Bedingungen, zu 110x100x2 mm Prüfkörpern umgeformt, konditioniert und geprüft. Die Meßwerte sind in Tabelle 4 aufgeführt.

**Tab. 4 Übersicht der mechanischen und elektrischen Eigenschaften sowie der Verträglichkeit der antistatischen TPU, bzw. des Polymerblend aus Tab.1 in Polystyrol (Styron 485, Fa.Styron)**

| **fortlaufende Bezeichnung** | | | | | Beispiel 19 | Beispiel 20 | Beispiel 21 | Beispiel 22 | Beispiel 23 | Beispiel 24 | Beispiel 25 | Beispiel 26 | Beispiel 27 |
|---|---|---|---|---|---|---|---|---|---|---|---|---|---|
| **TPU-Rezeptur** | | | | | | Vergleich 2 | Vergleich 3 | erfindungsgemäßer Ansatz 1 | Vergleich 4 | Vergleich 5 | erfindungsgemäßer Ansatz 2 | erfindungsgemäßer Ansatz 3 | erfindungsgemäßer Ansatz 4 |
| Prüfung | Norm | | | Einheit | Ergebnis | Ergebnis | Ergebnis | Ergebnis | Ergebnis | Ergebnis | Ergebnis | Ergebnis | Ergebnis |
| **Mechank** | | | | | | | | | | | | | |
| Dichte | DIN EN ISO 1183-1A | | | g/cm 3 | 1,027 | 1,031 | 1,038 | 1,038 | 1,044 | 1,027 | 1,04 | 1,036 | 1,038 |
| Shore-Härte D | ISO 7619,Teil1 | | | | 78 | 71 | 70 | 72 | 67 | 70 | 70 | 71 | 67 |
| Zugfestigkeit | DIN 53504 | | | MPa s | 25 | 23 | 21 | 20 | 17 | 23 | 25 | 26 | 23 |
| Reißdehnung | | | | % | 60 | 30 | 8 | 40 | 5 | 40 | 10 | 20 | 10 |
| Weiterreißfestigkeit | DIN ISO 34-1, B (b | | | kN/ m | 122 | 115 | 76 | 104 | 76 | 106 | 64 | 91 | 69 |

| **Erweiterte Mechanik** | | | | | | | | | | | | | |
|---|---|---|---|---|---|---|---|---|---|---|---|---|---|
| Charpy-Schlaqzähiqkeit 23°C | DIN EN ISO 179-1/1eU | | | kJ/m 2 | 171 | 60,8 | 23 | 140 | 47,8 | | 45,1 | 103 | 112 |
| Bruch | | | | | ja | ja | ja | ja | ja | nein | ja | ja | ja |
| Charpy-Schlagzähigkeit -30°C | DIN EN ISO 179-1/1eU | | | kJ/m 2 | 93 | 107 | 31 | 165 | 94,7 | 122 | 46,6 | 108 | 92,6 |
| Bruch | | | | | ja | ja | ja | ja | ja | ja | ja | ja | ja |
| Charpy-Kerbschlagzähigkeit 23°C | DIN EN ISO 179-1/1eA | | | kJ/m 2 | 9,5 | 9,1 | 5,5 | 10,4 | 10,1 | 9,7 | 8,4 | 11,6 | 11,3 |
| Bruch | | | | | ja | ja | ja | ja | ja | ja | ja | ja | ja |
| Charpy-Kerbschlagzähigkeit - 30°C | DIN EN ISO 179-1/1eA | | | kJ/m 2 | 5,2 | 5,6 | 2,9 | 5,4 | 5 | 3,2 | 4,1 | 8,2 | 6,5 |
| Bruch | | | | | ja | ja | ja | ja | ja | ja | ja | ja | ja |

| **elekrische Eigenschaften** | | | | | | | | | | | | | |
|---|---|---|---|---|---|---|---|---|---|---|---|---|---|
| spez. Durchgangswiderstand | DIN IEC 60093 | | | Ohm* cm | R maxi | 7,00E +12 | 3,90E +09 | 1,00E +10 | 1,90E +10 | 1,70E +10 | 2,00E +10 | 3,00E +09 | 6,30E +09 |
| spez.Oberflächenwidersta nd mit GE | DIN IEC 60093 | | | Ohm | 3,80E +14 | 5,50E +11 | 3,70E +09 | 2,90E +09 | 6,90E +09 | 1,40E +10 | 4,00E +09 | 3,40E +08 | 2,90E +08 |
| spez.Oberflächenwidersta nd ohne GE | DIN IEC 60093 | | | Ohm | 1,20E +14 | 3,60E +11 | 2,50E +09 | 2,50E +09 | 4,80E +09 | 1,20E +10 | 3,50E +09 | 2,80E +08 | 2,70E +08 |

| **Auswertung/ Beurteilung:** | | | | | | | | | | | | | |
|---|---|---|---|---|---|---|---|---|---|---|---|---|---|
| **Optik der Spritzplatte** | | | | | **+** | **+** | **+** | **+** | **-** | **○** | **+** | **+** | **+** |
| **Bruchverhalten** | längs der Spritzrichtung | | | | **-** | **-** | **-** | **-** | **-** | **-** | **-** | **-** | **-** |
| **Bruchverhalten** | quer zur Spritzrichtuna | | | | **+** | **-** | **-** | **+** | **-** | **+** | **-** | **-** | **-** |

### Beispiel 28 bis 36, Herstellung und Beurteilung antistischer Polyethylen-Compounds

Beispiel 28, Herstellung der Referenz-Probe auf Basis eines reinen Polyethylens 1.600 g Polyethylen, Lupolen 4261 AG der Fa. Basell, wurden im Spritzguß, unter vorabbeschriebenen Bedingungen, zu 110x100x2mm Prüfkörpern umgeformt, konditioniert und geprüft. Die Meßwerte sind in Tabelle 5 aufgeführt.

### Beispiel 29, Herstellung eines antistatischen Polyethylen-Compounds mit TPU gemäß Beispiel 2 (Vergleich 2)

1.360 Polyethylen, Lupolen 4261 AG der Fa. Basell, wurden mit 240g des unter Beispiel 2 beschriebenen antistatischen TPU abgemischt und als Dryblend, d.h. als Granulatmischung im Spritzguß, unter vorabbeschriebenen Bedingungen, zu 110x100x2mm Prüfkörpern umgeformt, konditioniert und geprüft. Die Meßwerte sind in Tabelle 5 aufgeführt.

### Beispiel 30, Herstellung eines antistatischen Polyethylen-Compounds mit TPU gemäß Beispiel 3 (Vergleich 3)

1.360 Polyethylen, Lupolen 4261 AG der Fa. Basell, wurden mit 240g des unter Beispiel 3 beschriebenen antistatischen TPU abgemischt und als Dryblend, d.h. als Granulatmischung im Spritzguß, unter vorabbeschriebenen Bedingungen, zu 110x100x2mm Prüfkörpern umgeformt, konditioniert und geprüft. Die Meßwerte sind in Tabelle 5 aufgeführt

### Beispiel 31, Herstellung eines antistatischen Polyethylen-Compounds mit TPU gemäß Beispiel 4 (erfindungsgemäßer Ansatz 1)

1.360 Polyethylen, Lupolen 4261 AG der Fa. Basell, wurden mit 240g des unter Beispiel 4 beschriebenen antistatischen TPU abgemischt und als Dryblend, d.h. als Granulatmischung im Spritzguß, unter vorabbeschriebenen Bedingungen, zu 110x100x2mm Prüfkörpern umgeformt, konditioniert und geprüft. Die Meßwerte sind in Tabelle 5 aufgeführt

### Beispiel 32, Herstellung eines antistatischen Polyethylen-Compounds mit TPU gemäß Beispiel 5 (Vergleich 4)

1.360 Polyethylen, Lupolen 4261 AG der Fa. Basell, wurden mit 240g des unter Beispiel 5 beschriebenen antistatischen TPU abgemischt und als Dryblend, d.h. als Granulatmischung im Spritzguß, unter vorabbeschriebenen Bedingungen, zu 110x100x2mm Prüfkörpern umgeformt, konditioniert und geprüft. Die Meßwerte sind in Tabelle 5 aufgeführt

### Beispiel 33, Herstellung eines antistatischen Polyethylen-Compounds mit Polymerblend gemäß Beispiel 6 (Vergleich5)

1.360 Polyethylen, Lupolen 4261 AG der Fa. Basell, wurden mit 240g des unter Beispiel 6 beschriebenen antistatischen Polymerblend abgemischt und als Dryblend, d.h. als Granulatmischung im Spritzguß, unter vorabbeschriebenen Bedingungen, zu 110x100x2mm Prüfkörpern umgeformt, konditioniert und geprüft. Die Meßwerte sind in Tabelle 5 aufgeführt

### Beispiel 34, Herstellung eines antistatischen Polyethylen-Compounds mit TPU gemäß Beispiel 7 (erfindungsgemäßer Ansatz 2)

1.360 Polyethylen, Lupolen 4261 AG der Fa. Basell, wurden mit 240g des unter Beispiel 7 beschriebenen antistatischen TPU abgemischt und als Dryblend, d.h. als Granulatmischung im Spritzguß, unter vorabbeschriebenen Bedingungen, zu 110x100x2mm Prüfkörpern umgeformt, konditioniert und geprüft. Die Meßwerte sind in Tabelle 5 aufgeführt

### Beispiel 35, Herstellung eines antistatischen Polyethylen-Compounds mit TPU gemäß Beispiel 8 (erfindungsgemäßer Ansatz 3)

1.360 Polyethylen, Lupolen 4261 AG der Fa. Basell, wurden mit 240g des unter Beispiel 8 beschriebenen antistatischen TPU abgemischt und als Dryblend, d.h. als Granulatmischung im Spritzguß, unter vorabbeschriebenen Bedingungen, zu 110x100x2mm Prüfkörpern umgeformt, konditioniert und geprüft. Die Meßwerte sind in Tabelle 5 aufgeführt

### Beispiel 36, Herstellung eines antistatischen Polyethylen-Compounds mit TPU gemäß Beispiel 9 (erfindungsgemäßer Ansatz 3)

1.360 Polyethylen, Lupolen 4261 AG der Fa. Basell, wurden mit 240g des unter Beispiel 9 beschriebenen antistatischen TPU abgemischt und als Dryblend, d.h. als Granulatmischung im Spritzguß, unter vorabbeschriebenen Bedingungen, zu 110x100x2mm Prüfkörpern umgeformt, konditioniert und geprüft. Die Meßwerte sind in Tabelle 5 aufgeführt

| **fortlaufende Bezeichnung** | | | | | Beispiel 28 | Beispiel 29 | Beispiel 30 | Beispiel 31 | Beispiel 32 | Beispiel 33 | Beispiel 34 | Beispiel 35 | Beispiel 36 |
|---|---|---|---|---|---|---|---|---|---|---|---|---|---|
| TPU-Rezeptur | | | | | | Vergleich 2 | Vergleich 3 | erfindungsgemäßer Ansatz 1 | Vergleich 4 | Vergleich 5 | erfindungsgemäßer Ansatz 2 | erfindungsgemäßer Ansatz 3 | erfindungsgemäßer Ansatz 4 |
| Prüfung | Norm | | | Einheit | Ergebnis | Ergebnis | Ergebnis | Ergebnis | Ergebnis | Ergebnis | Ergebnis | Ergebnis | Ergebnis |
| **Mechanik** | | | | | | | | | | | | | |
| Dichte | DIN EN ISO 1183-1A | | | g/cm 3 | 0,94 | 0,951 | 0,96 | 0,964 | 0,96 | 0,953 | 0,961 | 0,958 | 0,959 |
| Shore-Härte D | ISO 7619,Teil1 | | | | 66 | 61 | 56 | 59 | 60 | 64 | 61 | 61 | 59 |
| Zugfestigkeit | DIN 53504 | | | MPa s | 45 | 29 | 15 | 31 | 31 | 42 | 30 | 27 | 23 |
| Reißdehnung | | | | % | 10 | 8 | 8 | 10 | 10 | 9 | 80 | 140 | 70 |
| Weiterreißfestigkeit | DIN ISO 34-1, B (b | | | kN/m | 186 | 108 | 82 | 95 | 110 | 110 | 105 | 134 | 115 |
| **Erweiterte Mechanik** | | | | | | | | | | | | | |
| Charpy-Schlagzähigkeit 23°C | DIN EN ISO 179-1/1eU | | | kJ/m2 | | | | | | | | | |
| Bruch | | | | | nein | nein | nein | nein | nein | nein | nein | nein | nein |
| Charpy-Schlagzähigkeit - 30°C | DIN EN ISO 179-1/1eU | | | kJ/m2 | | | 20,2 | | | 119 | 98,8 | | |
| Bruch | | | | | nein | nein | ja | nein | nein | ja | ja | nein | nein |
| Charpy-Kerbschlagzähigkeit 23°C | DIN EN ISO 179-1/1eA | | | kJ/m2 | | 69,2 | 61,8 | | | 30,3 | 59,3 | 71,9 | 73,8 |
| Bruch | | | | | nein | ja | ja | nein | nein | ja | ja | ja | ja |
| Charpy-Kerbschlagzähigkeit - 30°C | DIN EN ISO 179-1/1eA | | | kJ/m2 | 54,6 | 18,6 | 10,6 | | 23,7 | 10,6 | 24,8 | 27,7 | 66,8 |
| Bruch | | | | | ja | ja | ja | nein | ja | ja | ja | ja | ja |
| **elekrische Eigenschaften** | | | | | | | | | | | | | |
| spez. Durchgangswiderstand | DIN IEC 60093 | | | Ohm* cm | R maxi | 3,40E+ 12 | 1,50E+ 09 | 5.20E+ 08 | 4.20E+ 10 | 6,90E+ 10 | 2,40E+ 10 | 2,60E+ 09 | 9.30E+ 10 |
| spez. Oberfl ächenwi de rstand mit GE | DIN IEC 60093 | | | Ohm | 1,20E+ 16 | 4,20E+ 11 | 2,80E+ 08 | 2,70E+ 09 | 1,50E+ 10 | 2,60E+ 09 | 5,40E+ 09 | 8.30E+ 08 | 3.20E+ 08 |
| spez.Oberflächenwiderstand ohne GE | DIN IEC 60093 | | | Ohm | 4,70E+ 14 | 4,50E+ 11 | 2,60E+ 08 | 2,30E+ 09 | 1,20E+ 10 | 2,60E+ 09 | 5,70E+ 09 | 7,30E+ 08 | 4,10E+ 08 |
| **Auswertung/ Beurteilung:** | | | | | | | | | | | | | |
| **Optik der Spritzplatte** | | | | | + | ○ | ○ | + | ○ | + | + | + | + |
| **Bruchverhalten** | längs der Spritzrichtung | | | | + | ○ | ○ | - | - | - | ○ | ○ | ○ |
| **Bruchverhalten** | quer zur Spritzrichtung | | | | + | - | ○ | + | ○ | + | ○ | ○ | ○ |

| | | | | | | | | | | | | | |
|---|---|---|---|---|---|---|---|---|---|---|---|---|---|
| Tab.5 Übersicht der mechanischen und elektischen Eigenschaften, sowie der Verträglichkeit derantistatischen TPU, bzw. des Polymerblend aus Tab.1 in Polyethylen (Lupolen 4261 AG, Fa.Basell) | | | | | | | | | | | | | |

### Beispiel 37 bis 45, Herstellung und Beurteilung antistischer Polyoxymethylen-Compounds

### Beispiel 37, Herstellung der Referenz-Probe auf Basis eines reinen Polyoxymethylen

1.600 g Polyoxymethylen, kurz POM, hier ein Ultraform N 2320 der Fa. BASF,wurden im Spritzguß, unter vorabbeschriebenen Bedingungen, zu 110x100x2mm Prüfkörpern umgeformt, konditioniert und geprüft. Die Meßwerte sind in Tabelle 6 aufgeführt.

### Beispiel 38, Herstellung eines antistatischen Polyoxymethylen-Compounds mit TPU gemäß Beispiel 2 (Vergleich 2)

1.360g Polyoxymethylen, Ultraform N 2320 der Fa. BASF, wurden mit 240g des unter Beispiel 2 beschriebenen antistatischen TPU abgemischt und als Dryblend, d.h. als Granulatmischung im Spritzguß, unter vorabbeschriebenen Bedingungen, zu 110x100x2mm Prüfkörpern umgeformt, konditioniert und geprüft. Die Meßwerte sind in Tabelle 6 aufgeführt.

### Beispiel 39, Herstellung eines antistatischen Polyoxymethylen-Compounds mit TPU gemäß Beispiel 3 (Vergleich 3)

1.360g Polyoxymethylen, Ultraform N 2320 der Fa. BASF, wurden mit 240g des unter Beispiel 3 beschriebenen antistatischen TPU abgemischt und als Dryblend, d.h. als Granulatmischung im Spritzguß, unter vorabbeschriebenen Bedingungen, zu 110x100x2mm Prüfkörpern umgeformt, konditioniert und geprüft. Die Meßwerte sind in Tabelle 6 aufgeführt.

### Beispiel 40, Herstellung eines antistatischen Polyoxymethylen-Compounds mit TPU gemäß Beispiel 4 (erfindungsgemäßer Ansatz 1)

1.360g Polyoxymethylen, Ultraform N 2320 der Fa.BASF, wurden mit 240g des unter Beispiel 4 beschriebenen antistatischen TPU abgemischt und als Dryblend, d.h. als Granulatmischung im Spritzguß, unter vorabbeschriebenen Bedingungen, zu 110x1 00x2mm Prüfkörpern umgeformt, konditioniert und geprüft. Die Meßwerte sind in Tabelle 6 aufgeführt.

### Beispiel 41, Herstellung eines antistatischen Polyoxymethylen-Compounds mit TPU gemäß Beispiel 5 (Vergleich 4)

1.360g Polyoxymethylen, Ultraform N 2320 der Fa. BASF, wurden mit 240g des unter Beispiel 5 beschriebenen antistatischen TPU abgemischt und als Dryblend, d.h. als Granulatmischung im Spritzguß, unter vorabbeschriebenen Bedingungen, zu 110x100x2mm Prüfkörpern umgeformt, konditioniert und geprüft. Die Meßwerte sind in Tabelle 6 aufgeführt.

### Beispiel 42, Herstellung eines antistatischen Polyoxymethylen-Compounds mit Polymerblend gemäß Beispiel 6 (Vergleich5)

1.360g Polyoxymethylen, Ultraform N 2320 der Fa. BASF, wurden mit 240g des unter Beispiel 6 beschriebenen antistatischen Polymerblend abgemischt und als Dryblend, d.h. als Granulatmischung im Spritzguß, unter vorabbeschriebenen Bedingungen, zu 110x100x2mm Prüfkörpern umgeformt, konditioniert und geprüft. Die Meßwerte sind in Tabelle 6 aufgeführt.

### Beispiel 43, Herstellung eines antistatischen Polyoxymethylen-Compounds mit TPU gemäß Beispiel 7 (erfindungsgemäßer Ansatz 2)

1.360g Polyoxymethylen, Ultraform N 2320 der Fa.BASF, wurden mit 240g des unter Beispiel 7 beschriebenen antistatischen TPU abgemischt und als Dryblend, d.h. als Granulatmischung im Spritzguß, unter vorabbeschriebenen Bedingungen, zu 110x1 00x2mm Prüfkörpern umgeformt, konditioniert und geprüft. Die Meßwerte sind in Tabelle 6 aufgeführt.

### Beispiel 44, Herstellung eines antistatischen Polyoxymethylen-Compounds mit TPU gemäß Beispiel 8 (erfindungsgemäßer Ansatz 3)

1.360g Polyoxymethylen, Ultraform N 2320 der Fa.BASF, wurden mit 240g des unter Beispiel 8 beschriebenen antistatischen TPU abgemischt und als Dryblend, d.h. als Granulatmischung im Spritzguß, unter vorabbeschriebenen Bedingungen, zu 110x1 00x2mm Prüfkörpern umgeformt, konditioniert und geprüft. Die Meßwerte sind in Tabelle 6 aufgeführt.

### Beispiel 45, Herstellung eines antistatischen Polyoxymethylen-Compounds mit TPU gemäß Beispiel 9 (erfindungsgemäßer Ansatz 4)

1.360g Polyoxymethylen, Ultraform N 2320 der Fa.BASF, wurden mit 240g des unter Beispiel 9 beschriebenen antistatischen TPU abgemischt und als Dryblend, d.h. als Granulatmischung im Spritzguß, unter vorabbeschriebenen Bedingungen, zu 110x100x2mm Prüfkörpern umgeformt, konditioniert und geprüft. Die Meßwerte sind in Tabelle 6 aufgeführt.

**Tab.6 Übersicht der mechanischen und elektrischen Eigenschaften, sowie der Verträglichkeit der antistatischen TPU, bzw. des Polymerblend aus Tab.1 in Polyoxymethylen (Ultraform N 2320, Fa. BASF)**

| **fortlaufende Bezeichnung** | | | | | Beispiel 37 | Beispiel 38 | Beispiel 39 | Beispiel 40 | Beispiel 41 | Beispiel 42 | Beispiel 43 | Beispiel 44 | Beispiel 45 |
|---|---|---|---|---|---|---|---|---|---|---|---|---|---|
| **TPU-Rezeptur** | | | | | | Vergleich 2 | Vergleich 3 | erfindungsgemäßer Ansatz 1 | Vergleich 4 | Vergleich 5 | erfindungsgemäßer Ansatz 2 | erfindungsgemäßer Ansatz 3 | erfindungsgemäßer Ansatz 4 |
| **Prüfung** | Norm | | | Einheit | Ergebnis | Ergebnis | Ergebnis | Ergebnis | Ergebnis | Ergebnis | Ergebnis | Ergebnis | Ergebnis |
| **Mechanik** | | | | | | | | | | | | | |
| Dichte | DIN EN ISO 1183-1A | | | g/cm 3 | 1,399 | 1,328 | 1,36 | 1,342 | 1,36 | 1,342 | 1,365 | 1,353 | 1,355 |
| Shore-Härte D | ISO 7619,Teil1 | | | | 81 | 72 | 76 | 75 | 76 | 78 | 77 | 76 | 75 |
| Zugfestigkeit | DIN 53504 | | | MPa s | 62 | 39 | 51 | 47 | 44 | 53 | 53 | 47 | 48 |
| Reißdehnung | | | | % | 40 | 30 | 50 | 70 | 20 | 30 | 30 | 70 | 70 |
| Weiterreißfestigkeit | DIN ISO 34-1, B (b | | | kN/m | 128 | 175 | 213 | 217 | 197 | 148 | 88 | 170 | 153 |
| **Erweiterte Mechanik** | | | | | | | | | | | | | |
| Charpy-Schlagzähigkeit 23°C | DIN EN ISO 179-1/1eU | | | kJ/m 2 | 217 | | | 88,3 | 66,1 | | 134 | | |
| Bruch | | | | | ja | nein | nein | ja | ja | nein | ja | nein | nein |
| Charpy-Schlagzähigkeit - 30°C | DIN EN ISO 179-1/1eU | | | kJ/m 2 | 154 | 211 | 169 | 145 | 31,6 | 198 | 53,2 | 232 | 205 |
| Bruch | | | | | ja | ja | ja | ja | ja | ja | ja | ja | ja |
| Charpy-Kerbschlagzähigkeit 23°C | DIN EN ISO 179-1/1eA | | | kJ/m 2 | 5,5 | 6,8 | 8,1 | 7,7 | 6 | 6 | 8,5 | 11,3 | 12,8 |
| Bruch | | | | | ja | ja | ja | ja | ja | ja | ja | ja | ja |
| Charpy-Kerbschlagzähigkeit - 30°C | DIN EN ISO 179-1/1eA | | | kJ/m 2 | 5,5 | 5,9 | 5,4 | 6,5 | 3,9 | 5,2 | 5,6 | 10 | 10,4 |
| Bruch | | | | | ja | ja | ja | ja | ja | ja | ja | ja | ja |
| **elekrische Eigenschaften** | | | | | | | | | | | | | |
| spez. Durchqanqswiderstand | DIN IEC 60093 | | | Ohm* cm | 1,20E+ 14 | 2,30E+ 12 | 1,20E+ 10 | 3.70E+ 09 | 1,60E+ 11 | 1,20E+ 10 | 7,70E+ 10 | 2,00E+ 10 | 1,40E+ 10 |
| spez.Oberflächenwiderstand mit GE | DIN IEC 60093 | | | Ohm | 1.10E+ 15 | 1.80E+ 12 | 1.90E+ 09 | 9,10E+ 09 | 2,40E+ 10 | 6,10E+ 09 | 9.00E+ 09 | 1.90E+ 09 | 1,50E+ 09 |
| spez.Oberflächenwiderstand ohne GE | DIN IEC 60093 | | | Ohm | 1,00E+ 14 | 1,20E+ 12 | 1,60E+ 09 | 8,00E+ 09 | 2,10E+ 10 | 3,20E+ 09 | 7,80E+ 09 | 1,80E+ 09 | 1,10E+ 09 |
| **Auswertung/ Beurteilung:** | | | | | | | | | | | | | |
| **Optik der Spritzplatte** | | | | | **+** | **○** | **○** | **○** | **-** | **○** | **○** | **○** | **○** |
| **Bruchverhalten** | längs der Spritzrichtung | | | | **+** | **-** | **○** | **+** | **-** | **-** | **-** | **+** | **+** |
| **Bruchverhalten** | quer zur Spritzrichtung | | | | **+** | **+** | **+** | **+** | **○** | **+** | **+** | **+** | **+** |

### Beispiel 46 bis 54, Herstellung und Beurteilung antistischer Polyoxymethylen-Compounds

### Beispiel 46, Herstellung der Referenz-Probe auf Basis eines reinen Polvinylchlorid

1.600 g Polyvinylchlorid, kurz PVC, hier ein Weich-PVC der Fa. Nicocyl GmbH wurden im Spritzguß, unter vorab beschriebenen Bedingungen, zu 110x100x2mm Prüfkörpern umgeformt, konditioniert und geprüft. Die Meßwerte sind in Tabelle 7 aufgeführt.

### Beispiel 47, Herstellung eines antistatischen Polvinylchlorid-Compounds mit TPU gemäß Beispiel 2 (Vergleich 2)

1.360g Polyvinylchlorid, kurz PVC, hier ein Weich-PVC der Fa. Nicocyl GmbH, wurden mit 240g des unter Beispiel 2 beschriebenen antistatischen TPU abgemischt und als Dryblend, d.h. als Granulatmischung im Spritzguß, unter vorabbeschriebenen Bedingungen, zu 110x100x2mm Prüfkörpern umgeformt, konditioniert und geprüft. Die Meßwerte sind in Tabelle 7 aufgeführt.

### Beispiel 48, Herstellung eines antistatischen Polvinylchlorid-Compounds mit TPU gemäß Beispiel 3 (Vergleich 3)

1.360g Polyvinylchlorid, kurz PVC, hier ein Weich-PVC der Fa. Nicocyl GmbH, wurden mit 240g des unter Beispiel 3 beschriebenen antistatischen TPU abgemischt und als Dryblend, d.h. als Granulatmischung im Spritzguß, unter vorabbeschriebenen Bedingungen, zu 110x100x2mm Prüfkörpern umgeformt, konditioniert und geprüft. Die Meßwerte sind in Tabelle 7 aufgeführt.

### Beispiel 49, Herstellung eines antistatischen Polvinylchlorid-Compounds mit TPU gemäß Beispiel 4 (erfindungsgemäßer Ansatz 1)

1.360g Polyvinylchlorid, kurz PVC, hier ein Weich-PVC der Fa. Nicocyl GmbH, wurden mit 240g des unter Beispiel 4 beschriebenen antistatischen TPU abgemischt und als Dryblend, d.h. als Granulatmischung im Spritzguß, unter vorabbeschriebenen Bedingungen, zu 110x100x2mm Prüfkörpern umgeformt, konditioniert und geprüft. Die Meßwerte sind in Tabelle 7 aufgeführt.

### Beispiel 50, Herstellung eines antistatischen Polvinylchlorid-Compounds mit TPU gemäß Beispiel 5 (Vergleich 4)

1.360g Polyvinylchlorid, kurz PVC, hier ein Weich-PVC der Fa. Nicocyl GmbH, wurden mit 240g des unter Beispiel 5 beschriebenen antistatischen TPU abgemischt und als Dryblend, d.h. als Granulatmischung im Spritzguß, unter vorabbeschriebenen Bedingungen, zu 110x100x2mm Prüfkörpern umgeformt, konditioniert und geprüft. Die Meßwerte sind in Tabelle 7 aufgeführt.

### Beispiel 51, Herstellung eines antistatischen Polvinylchlorid-Compounds mit TPU gemäß Beispiel 6 (Vergleich 5)

1.360g Polyvinylchlorid, kurz PVC, hier ein Weich-PVC der Fa. Nicocyl GmbH, wurden mit 240g des unter Beispiel 6 beschriebenen antistatischen TPU abgemischt und als Dryblend, d.h. als Granulatmischung im Spritzguß, unter vorabbeschriebenen Bedingungen, zu 110x100x2mm Prüfkörpern umgeformt, konditioniert und geprüft. Die Meßwerte sind in Tabelle 7 aufgeführt.

### Beispiel 52, Herstellung eines antistatischen Polvinylchlorid-Compounds mit TPU gemäß Beispiel 7 (erfindungsgemäßer Ansatz 2)

1.360g Polyvinylchlorid, kurz PVC, hier ein Weich-PVC der Fa. Nicocyl GmbH, wurden mit 240g des unter Beispiel 7 beschriebenen antistatischen TPU abgemischt und als Dryblend, d.h. als Granulatmischung im Spritzguß, unter vorabbeschriebenen Bedingungen, zu 110x100x2mm Prüfkörpern umgeformt, konditioniert und geprüft. Die Meßwerte sind in Tabelle 7 aufgeführt.

### Beispiel 53, Herstellung eines antistatischen Polvinylchlorid-Compounds mit TPU gemäß Beispiel 8 (erfindungsgemäßer Ansatz 3)

1.360g Polyvinylchlorid, kurz PVC, hier ein Weich-PVC der Fa. Nicocyl GmbH, wurden mit 240g des unter Beispiel 8 beschriebenen antistatischen TPU abgemischt und als Dryblend, d.h. als Granulatmischung im Spritzguß, unter vorabbeschriebenen Bedingungen, zu 110x100x2mm Prüfkörpern umgeformt, konditioniert und geprüft. Die Meßwerte sind in Tabelle 7 aufgeführt.

### Beispiel 54, Herstellung eines antistatischen Polvinylchlorid-Compounds mit TPU gemäß Beispiel 9 (erfindungsgemäßer Ansatz 4)

1.360g Polyvinylchlorid, kurz PVC, hier ein Weich-PVC der Fa. Nicocyl GmbH, wurden mit 240g des unter Beispiel 9 beschriebenen antistatischen TPU abgemischt und als Dryblend, d.h. als Granulatmischung im Spritzguß, unter vorabbeschriebenen Bedingungen, zu 110x100x2mm Prüfkörpern umgeformt, konditioniert und geprüft. Die Meßwerte sind in Tabelle 7 aufgeführt.

**Tab.7 Übersicht der mechanischen und elektrischen Eigenschaften, sowie der Verträglichkeit der antistatischen TPU, bzw. des Polymerblend aus Tab.1 in Polyvinylchlorid (Weich-PVC, Fa. Nicocyl GmbH)**

| **fortlaufende Bezeichnung** | | | | | Beispiel 46 | Beispiel 47 | Beispiel 48 | Beispiel 49 | Beispiel 50 | Beispiel 51 | Beispiel 52 | Beispiel 53 | Beispiel 54 |
|---|---|---|---|---|---|---|---|---|---|---|---|---|---|
| **TPU-Rezeptur** | | | | | | Vergleich 2 | Vergleich 3 | erfindungsgemäßer Ansatz 1 | Vergleich 4 | Vergleich 5 | erfindungsgemäßer Ansatz 2 | erfindungsgemäßer Ansatz 3 | erfindungsgemäßer Ansatz 4 |
| **Prüfung** | Norm | | | Einheit | Ergebnis | Ergebnis | Ergebnis | Ergebnis | Ergebnis | Ergebnis | Ergebnis | Ergebnis | Ergebnis |
| **Mechanik** | | | | | | | | | | | | | |
| Dichte | DIN EN ISO 1183-1A | | | g/cm 3 | 1,512 | 1,436 | 1,453 | 1,446 | 1,455 | 1,433 | 1,453 | 1,441 | 1,444 |
| Shore-Härte D | ISO 7619,Tei11 | | | | 57 | 50 | 48 | 46 | 46 | 57 | 55 | 44 | 48 |
| Zugfestigkeit | DIN 53504 | | | MPa s | 18 | 13 | 13 | 11 | 11 | 17 | 17 | 12 | 13 |
| Reißdehnung | | | | % | 130 | 110 | 80 | 70 | 90 | 130 | 110 | 80 | 110 |
| Weiterreißfestigkeit | DIN ISO 34-1, B (b | | | kN/m | 81 | 54 | 55 | 40 | 49 | 81 | 79 | 45 | 59 |
| **Erweiterte Mechanik** | | | | | | | | | | | | | |
| Charpy-Schlagzähigkeit 23°C | DIN EN ISO 179-1/1eU | | | kJ/m 2 | | | | | | | | | |
| Bruch | | | | | nein | nein | nein | nein | nein | nein | nein | nein | nein |
| Charpy-Schlagzähigkeit - 30°C | DIN EN ISO 179-1/1eU | | | kJ/m 2 | 43 | 58 | 36 | 60 | 58 | 41 | 30 | 56 | 70 |
| Bruch | | | | | ja | ja | ja | ja | ja | ja | ja | ja | ja |
| Charpy-Kerbschlagzähigkeit 23°C | DIN EN ISO 179-1/1eA | | | kJ/m 2 | 62 | 16 | 37 | 38 | 60 | 69 | 63 | 57 | 31 |
| Bruch | | | | | ja | ja | ja | ja | ja | ja | ja | ja | ja |
| Charpy-Kerbschlagzähigkeit - 30°C | DIN EN ISO 179-1/1eA | | | kJ/m 2 | 3,4 | 4 | 3,8 | 4 | 3,8 | 3,8 | 3,7 | 3,9 | 4,2 |
| Bruch | | | | | ja | ja | ja | ja | ja | ja | ja | ja | ja |
| **elekrische Eigenschaften** | | | | | | | | | | | | | |
| spez. Durchqanqswiderstand | DIN IEC 60093 | | | Ohm* cm | 2,80E+ 14 | 1,30E+ 10 | 2,40E+ 08 | 1,20E+ 08 | 3,70E+ 08 | 1,90E+ 10 | 8,60E+ 08 | 2,10E+ 08 | 1,10E+ 08 |
| spez. Oberfl ächenwi de rstand mit GE | DIN IEC 60093 | | | Ohm | 1,30E+ 14 | 6,90E+ 10 | 8,80E+ 07 | 4,00E+ 08 | 5,80E+ 08 | 1,10E+ 10 | 1,50E+ 09 | 4,60E+ 08 | 4,60E+ 08 |
| spez. Oberfl ächenwi de rstand ohne GE | DIN IEC 60093 | | | Ohm | 3,60E+ 13 | 1,60E+ 10 | 7,90E+ 07 | 1,60E+ 08 | 3,60E+ 08 | 1,00E+ 10 | 7,90E+ 08 | 2,80E+ 08 | 2,40E+ 08 |
| **Auswertung/ Beurteilung:** | | | | | | | | | | | | | |
| **Optik der Spritzplatte** | | | | | **+** | **+** | **+** | **+** | **+** | **+** | **+** | **+** | **+** |
| **Bruchverhalten** | längs der Spritzrichtung | | | | **+** | **+** | **+** | **+** | **+** | **+** | **+** | **○** | **+** |
| **Bruchverhalten** | quer zur Spritzrichtung | | | | **+** | **+** | **+** | **+** | **+** | **+** | **+** | **+** | **+** |

## Patentansprüche

1. Zusammensetzung enthaltend ein thermoplastisches Polyurethan, wobei das thermoplastische Polyurethan hergestellt ist aus
a) einem Diisocyanat
b) einem Polyol, das ein Polyol A und ein Polyol B enthält und
c) einem Kettenverlängerer
gegebenenfalls mit Hilfe von Katalysatoren und gegebenenfalls weiterhin enthalten Zusatzstoffe und/oder Hilfsstoffe
**dadurch gekennzeichnet, dass**
in der Zusammensetzung ein Salz und/oder eine ionische Flüssigkeit, bevorzugt eine ionische Flüssigkeit, enthalten ist, es sich bei dem Diisocyanat um ein aliphatisches und/oder cycloaliphaties Diisocyanat handelt,das Polyol A Ethoxy- und Propoxy- Gruppen enthält und das Polyol B Butoxy-Gruppen enthält und es sich bei dem Kettenverlängerer um ein Alkandiol mit 2 bis 10 C-Atomen im Alkylenrest handelt.

2. Zusammensetzung nach Anspruch 1,
**dadurch gekennzeichnet, dass**
der Mol-% Anteil der Ethoxy- und Propoxy-Gruppen und Butoxy-Gruppen jeweils mindestens 5 Mol-%, bevorzugt mindestens 10 Mol-% bezogen auf das gesamte Polyol beträgt.

3. Zusammensetzung nach einem der vorherigen Ansprüche,
**dadurch gekennzeichnet, dass** der Anteil der Ethoxy-Gruppen in dem Polyol mindestens 25 Mol-%, weiter bevorzugt mindestens 40 Mol-% und besonders bevorzugt mindestens 50 Mol-% bezogen auf das gesamte Polyol beträgt.

4. Zusammensetzung nach einem der vorherigen Ansprüche, **dadurch gekennzeichnet, dass** das Polyol B ein Homopolymer ist.

5. Zusammensetzung nach einem der vorherigen Ansprüche
**dadurch gekennzeichnet, dass** das Polyol A ein Blockcopolymer mit einem Block und zwei Enden ist und der Block Ethoxy- und Propoxy-Gruppen enthält und die beiden Enden des Blockcopolymers ausschließlich Ethoxy-Gruppen enthalten.

6. Zusammensetzung nach dem vorherigen Anspruch,
**dadurch gekennzeichnet, dass** der Anteil der Ethoxy-Gruppen in den beiden Enden des Blockcopolymers mehr als 5 Mol-%, bevorzugt mindestens 10 Mol-% und besonders bevorzugt mindestens 15 Mol-% bezogen auf das gesamten Blockcopolymer beträgt.

7. Zusammensetzung nach einem der vorherigen Ansprüche,
**dadurch gekennzeichnet, dass**
das Salz oder die ionische Flüssigkeit in einer Menge von 0,1 Gew.-% bis 25 Gew.-%, bevorzugt zwischen 1 Gew.-% und 10 Gew.-%, weiter bevorzugt zwischen 1,5 Gew.-% und 7,5 Gew.-% und besonders bevorzugt zwischen 2 Gew.-% und 5 Gew.-% bezogen auf das thermoplastische Polyurethan enthalten ist.

8. Zusammensetzung nach einem der vorherigen Ansprüche,
**dadurch gekennzeichnet, dass**
der Kettenverlängerer ausgewählt ist aus der Gruppe 1,3-Propandiol und 1,4-Butandiol, oder 1,3-Propandiol und 1,6 Hexandiol, oder 1,4-Butandiol und 1,6-Hexandiol, oder 1,6-Hexandiol.

9. Zusammensetzung nach einem der vorherigen Ansprüche,
**dadurch gekennzeichnet, dass**
das Diisocyanat ein aliphatisches Diisocyanat ist.

10. Mischung bestehend aus mindestens einem Polymer und einer Zusammensetzung nach einem der vorherigen Ansprüche.

11. Mischung nach dem vorherigen Anspruch,
**dadurch gekennzeichnet, dass**
das Polymer ausgewählt ist aus der Gruppe Polyethylen, Polypropylen, Polystyrol, Polyoxymethylen, Ethylenvinylacetat, Acrylnitril-Butadien-Styrol, Polyvinylchlorid, thermoplastisches Polyurethan, dessen Zusammensetzung sich von der der Ansprüche 1 bis 9 unterscheidet, bevorzugt aus der Gruppe Polyethylen, Polypropylen und Polystyrol.

12. Mischung nach Anspruch 10 oder 11,
**dadurch gekennzeichnet, dass**
die Zusammensetzung der Ansprüche 1 bis 9 in der Mischung mit einem Gewichtsanteil von mehr als 1 Gew.-% und weniger als 50 Gew.-% enthalten ist, bevorzugt mit mehr als 5 Gew.% und weniger als 35 Gew.-%, besonders bevorzugt mehr als 15 Gew.-% und weniger als 30 Gew.-%.

13. Verwendung einer Zusammensetzung nach einer der Ansprüche 1 bis 9 als Leitfähigkeitsverbesserer für ein Polymer.

14. Verfahren zur Herstellung einer Zusammensetzung gemäß einem der Ansprüche 1 bis 9,
**dadurch gekennzeichnet, dass**
in einem Schritt A das thermoplastische Polyurethan hergestellt wird und in einem Schritt B dieses thermoplastische Polyurethan mit einem Salz oder einer ionischen Flüssigkeit, bevorzugt eine mit einer ionischen Flüssigkeit vermischt wird.

15. Verfahren zur Herstellung einer Mischung gemäß einem der Ansprüche 10 bis 12 **dadurch gekennzeichnet, dass**
in einem Schritt A das thermoplastische Polyurethan hergestellt wird,
und in einem Schritt B dieses thermoplastische Polyurethan mit einem Salz oder einer ionischen Flüssigkeit, bevorzugt eine mit einer ionischen Flüssigkeit vermischt wird und das Produkt aus Schritt A und B mit einem Polymer vermischt wird.

16. Thermoplastisches Polyurethan hergestellt aus
a) einem Diisocyanat
b) einem Polyol, das ein Polyol A und ein Polyol B enthält und
c) einem Kettenverlängerer
gegebenenfalls mit Hilfe von Katalysatoren und gegebenenfalls weiterhin enthalten Zusatzstoffe und/oder Hilfsstoffe
**dadurch gekennzeichnet, dass** es sich bei dem Diisocyanat um ein aliphatisches und/oder cycloaliphatisches Diisocyanat handelt,
das Polyol A Ethoxy- und Propoxy- Gruppen enthält und das Polyol B Butoxy-Gruppen enthält und es sich bei dem Kettenverlängerer um ein Alkandiol mit 2 bis 10 C-Atomen im Alkylenrest handelt.

## Claims

1. A composition comprising a thermoplastic polyurethane, where the thermoplastic polyurethane has been prepared from
a) a diisocyanate,
b) a polyol comprising a polyol A and a polyol B and
c) a chain extender,
optionally with the aid of catalysts and optionally further comprising additives and/or auxiliaries, wherein a salt and/or an ionic liquid, preferably an ionic liquid, is comprised in the composition, the diisocyanate is an aliphatic and/or cycloaliphatic diisocyanate, the polyol A comprises ethoxy and propoxy groups and the polyol B comprises butoxy groups and the chain extender is an alkanediol having from 2 to 10 carbon atoms in the alkylene radical.

2. The composition according to claim 1, wherein the molar % of the ethoxy and propoxy groups and butoxy groups is in each case at least 5 mol%, preferably at least 10 mol%, based on the total polyol.

3. The composition according to either of the preceding claims, wherein the proportion of the ethoxy groups in the polyol is at least 25 mol%, more preferably at least 40 mol% and particularly preferably at least 50 mol%, based on the total polyol.

4. The composition according to any of the preceding claims, wherein the polyol B is a homopolymer.

5. The composition according to any of the preceding claims, wherein the polyol A is a block copolymer having a block and two ends and the block comprises ethoxy and propoxy groups and the two ends of the block copolymer comprise exclusively ethoxy groups.

6. The composition according to the preceding claim, wherein the proportion of the ethoxy groups in the two ends of the block copolymer is more than 5 mol%, preferably at least 10 mol% and particularly preferably at least 15 mol%, based on the total block copolymer.

7. The composition according to any of the preceding claims, wherein the salt or the ionic liquid is comprised in an amount of from 0.1% by weight to 25% by weight, preferably from 1% by weight to 10% by weight, more preferably from 1.5% by weight to 7.5% by weight and particularly preferably from 2% by weight to 5% by weight, based on the thermoplastic polyurethane.

8. The composition according to any of the preceding claims, wherein the chain extender is selected from the group consisting of 1,3-propanediol and 1,4-butanediol, or 1,3-propanediol and 1,6-hexanediol, or 1,4-butanediol and 1,6-hexanediol, or 1,6-hexanediol.

9. The composition according to any of the preceding claims, wherein the diisocyanate is an aliphatic diisocyanate.

10. A mixture comprising at least one polymer and a composition according to any of the preceding claims.

11. The mixture according to the preceding claim, wherein the polymer is selected from the group consisting of polyethylene, polypropylene, polystyrene, polyoxymethylene, ethylene-vinyl acetate, acrylonitrile-butadiene-styrene, polyvinyl chloride, thermoplastic polyurethane whose composition differs from that of claims 1 to 9, preferably from the group consisting of polyethylene, polypropylene and polystyrene.

12. The mixture according to claim 10 or 11, wherein the composition of claims 1 to 9 is comprised in the mixture in a proportion by weight of more than 1% by weight and less than 50% by weight, preferably more than 5% by weight and less than 35% by weight, particularly preferably more than 15% by weight and less than 30% by weight.

13. The use of a composition according to any of claims 1 to 9 as conductivity improver for a polymer.

14. A process for producing a composition according to any of claims 1 to 9, wherein the thermoplastic polyurethane is prepared in a step A and this thermoplastic polyurethane is mixed with a salt or an ionic liquid, preferably with an ionic liquid, in a step B.

15. A process for producing a mixture according to any of claims 10 to 12, wherein the thermoplastic polyurethane is prepared in a step A and this thermoplastic polyurethane is mixed with a salt or an ionic liquid, preferably with an ionic liquid, in a step B and the product from step A and B is mixed with a polymer.

16. A thermoplastic polyurethane prepared from
a) a diisocyanate,
b) a polyol comprising a polyol A and a polyol B and
c) a chain extender,
optionally with the aid of catalysts and optionally further comprising additives and/or auxiliaries, wherein the diisocyanate is an aliphatic and/or cycloaliphatic diisocyanate, the polyol A comprises ethoxy and propoxy groups and the polyol B comprises butoxy groups and the chain extender is an alkanediol having from 2 to 10 carbon atoms in the alkylene radical.

## Revendications

1. Composition contenant un polyuréthane thermoplastique, le polyuréthane thermoplastique étant fabriqué à partir de :
a) un diisocyanate,
b) un polyol, qui contient un polyol A et un polyol B, et
c) un allongeur de chaînes,
éventuellement à l'aide de catalyseurs et contenant éventuellement en outre des additifs et/ou des adjuvants, **caractérisée en ce qu'**un sel et/ou un liquide ionique, de préférence un liquide ionique, sont contenus dans la composition, le diisocyanate consiste en un diisocyanate aliphatique et/ou cycloaliphatique, le polyol A contient des groupes éthoxy et propoxy, et le polyol B contient des groupes butoxy, et l'allongeur de chaînes consiste en un alcane-diol contenant 2 à 10 atomes C dans le radical alkylène.

2. Composition selon la revendication 1, **caractérisée en ce que** la proportion en % en moles des groupes éthoxy et propoxy et des groupes butoxy est à chaque fois d'au moins 5 % en moles, de préférence d'au moins 10 % en moles, par rapport au polyol total.

3. Composition selon l'une quelconque des revendications précédentes, **caractérisée en ce que** la proportion des groupes éthoxy dans le polyol est d'au moins 25 % en moles, de manière davantage préférée d'au moins 40 % en moles et de manière particulièrement préférée d'au moins 50 % en moles, par rapport au polyol total.

4. Composition selon l'une quelconque des revendications précédentes, **caractérisée en ce que** le polyol B est un homopolymère.

5. Composition selon l'une quelconque des revendications précédentes, **caractérisée en ce que** le polyol A est un copolymère séquencé comprenant une séquence et deux extrémités, et la séquence contient des groupes éthoxy et propoxy, et les deux extrémités du copolymère séquencé contiennent exclusivement des groupes éthoxy.

6. Composition selon la revendication précédente, **caractérisée en ce que** la proportion des groupes éthoxy dans les deux extrémités du copolymère séquencé est supérieure à 5 % en moles, de préférence d'au moins 10 % en moles et de manière particulièrement préférée d'au moins 15 % en moles, par rapport au copolymère séquencé total.

7. Composition selon l'une quelconque des revendications précédentes, **caractérisée en ce que** le sel ou le liquide ionique est contenu en une quantité de 0,1 % en poids à 25 % en poids, de préférence en une quantité comprise entre 1 % en poids et 10 % en poids, de manière davantage préférée en une quantité comprise entre 1,5 % en poids et 7,5 % en poids, et de manière particulièrement préférée en une quantité comprise entre 2 % en poids et 5 % en poids, par rapport au polyuréthane thermoplastique.

8. Composition selon l'une quelconque des revendications précédentes, **caractérisée en ce que** l'allongeur de chaînes est choisi dans le groupe constitué par le 1,3-propanediol et le 1,4-butanediol, ou le 1,3-propanediol et le 1,6-hexanediol, ou le 1,4-butanediol et le 1,6-hexanediol, ou le 1,6-hexanediol.

9. Composition selon l'une quelconque des revendications précédentes, **caractérisée en ce que** le diisocyanate est un diisocyanate aliphatique.

10. Mélange constitué par au moins un polymère et une composition selon l'une quelconque des revendications précédentes.

11. Mélange selon la revendication précédente, **caractérisé en ce que** le polymère est choisi dans le groupe constitué par le polyéthylène, le polypropylène, le polystyrène, le polyoxyméthylène, l'éthylène-acétate de vinyle, l'acrylonitrile-butadiène-styrène, le polychlorure de vinyle, un polyuréthane thermoplastique dont la composition est différente de celui des revendications 1 à 9, de préférence dans le groupe constitué par le polyéthylène, le polypropylène et le polystyrène.

12. Mélange selon la revendication 10 ou 11, **caractérisé en ce que** la composition des revendications 1 à 9 est contenue dans le mélange en une proportion en poids supérieure à 1 % en poids et inférieure à 50 % en poids, de préférence supérieure à 5 % en poids et inférieure à 35 % en poids, de manière particulièrement préférée supérieure à 15 % en poids et inférieure à 30 % en poids.

13. Utilisation d'une composition selon l'une quelconque des revendications 1 à 9 en tant qu'agent d'amélioration de la conductivité pour un polymère.

14. Procédé de fabrication d'une composition selon l'une quelconque des revendications 1 à 9, **caractérisé en ce que**
lors d'une étape A, le polyuréthane thermoplastique est fabriqué,
et lors d'une étape B, ce polyuréthane thermoplastique est mélangé avec un sel ou un liquide ionique, de préférence avec un liquide ionique.

15. Procédé de fabrication d'un mélange selon l'une quelconque des revendications 10 à 12, **caractérisé en ce que**
lors d'une étape A, le polyuréthane thermoplastique est fabriqué,
et lors d'une étape B, ce polyuréthane thermoplastique est mélangé avec un sel ou un liquide ionique, de préférence avec un liquide ionique, et le produit des étapes A et B est mélangé avec un polymère.

16. Polyuréthane thermoplastique, fabriqué à partir de :
a) un diisocyanate,
b) un polyol, qui contient un polyol A et un polyol B, et
c) un allongeur de chaînes,
éventuellement à l'aide de catalyseurs et contenant éventuellement en outre des additifs et/ou des adjuvants, **caractérisé en ce que** le diisocyanate consiste en un diisocyanate aliphatique et/ou cycloaliphatique,
le polyol A contient des groupes éthoxy et propoxy, et le polyol B contient des groupes butoxy, et l'allongeur de chaînes consiste en un alcane-diol contenant 2 à 10 atomes C dans le radical alkylène.
